(19) Europäisches Patentamt / European Patent Office / Office européen des brevets

(11) EP 4 778 956 A1

(12) **EUROPEAN PATENT APPLICATION**
published in accordance with Art. 153(4) EPC

(43) Date of publication:
**22.07.2026 Bulletin 2026/30**

(21) Application number: **24865518.5**

(22) Date of filing: **12.09.2024**

(51) International Patent Classification (IPC):
***C08G 59/68*** (2006.01) ***B22F 1/00*** (2022.01)
***B22F 1/05*** (2022.01) ***B22F 1/10*** (2022.01)
***B22F 9/00*** (2006.01) ***C08G 59/62*** (2006.01)
***C08K 3/01*** (2018.01) ***C08K 5/06*** (2006.01)
***C08L 63/00*** (2006.01) ***H01F 1/08*** (2006.01)
***H01F 1/053*** (2006.01)

(52) Cooperative Patent Classification (CPC):
**B22F 1/00; B22F 1/05; B22F 1/10; B22F 9/00; C08G 59/62; C08G 59/68; C08K 3/01; C08K 5/06; C08L 63/00; H01F 1/053; H01F 1/08**

(86) International application number:
**PCT/JP2024/032710**

(87) International publication number:
**WO 2025/058018 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 JP 2023149343**

(71) Applicant: **ASAHI KASEI KABUSHIKI KAISHA**
**Tokyo 100-0006 (JP)**

(72) Inventors:
- **MIZUGUCHI Takuya**
  **Tokyo 100-0006 (JP)**
- **TSUKUDA Shinnosuke**
  **Tokyo 100-0006 (JP)**

(74) Representative: **Hoffmann Eitle**
**Patent- und Rechtsanwälte PartmbB**
**Arabellastraße 30**
**81925 München (DE)**

(54) **COMPOUND**

(57) An object is to provide a compound that has a long pot life in a production process, has little change in characteristics caused by heating at the time of bonded magnet formation, and also has high mechanical strength in the curing reaction of a thermosetting resin under a low-temperature condition. The present invention provides a compound including an epoxy resin (A), a metal element-containing particle (C), and a curing agent (D) having an imidazole structure, wherein the curing agent (D) having an imidazole structure includes a compound represented by the following formula (1) and/or a compound represented by the following formula (2) wherein $R_1$, $R_2$, X, Y, Z, m, and n are as described in the specification:

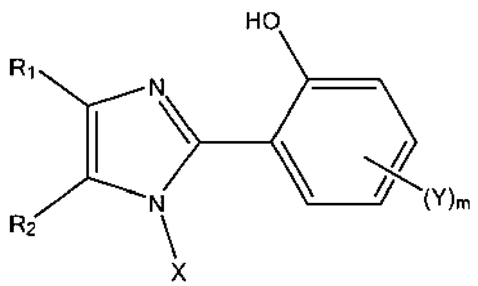

・・・・(1)

EP 4 778 956 A1

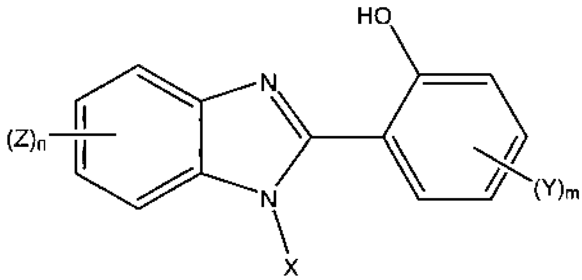

・・・・(2)

# Description

## Technical Field

The present invention relates to a compound.

## Background Art

Molded products obtained by mixing magnetic particles with a binder such as a resin component and processing the mixture into a predetermined shape is called bonded magnets. The bonded magnets, because of containing the resin component, have a high degree of freedom of shape and are superior in moldability to sintered magnets. Therefore, their applications are expanded to motor applications in automobiles, general home appliances, communication or audio equipment, medical equipment, general industrial equipment, and the like.
Meanwhile, an elevated number of motor rotations in anticipation of higher output is expected for these motors. The bonded magnets, which receive strong centrifugal force, tend to be required to have high mechanical strength which can suppress breakage or chipping.
Patent Literature 1 discloses that in a compound for a bonded magnet containing an epoxy resin, a curing agent, a curing accelerator, and a magnetic powder, wherein the accelerator has a borane structure and a borate structure, thereby providing a resin compound for a bonded magnet excellent in preservation stability and mechanical strength.
Patent Literature 2 discloses a method for producing a bonded magnet using a solvent, the bonded magnet comprising an epoxy resin, a curing agent, a curing accelerator, and a magnetic powder, wherein the accelerator and the solvent satisfy predetermined configurations, thereby providing a bonded magnet having excellent mechanical strength and a long pot life in a production process.

## Citation List

### Patent Literature

Patent Literature 1: Japanese Patent No. 6606908

Patent Literature 2: Japanese Patent No. 6198633

## Summary of Invention

### Technical Problem

Molding methods of bonded magnets are classified into compression molding and injection molding. These bonded magnets are often formed by mixing magnetic particles with a binder such as a resin component and molding the resulting composite material "compound" by the application of heat or pressure. The compound for compression molding is excellent in heat resistance because a thermosetting resin is used as the resin component. On the other hand, the curing reaction of the resin component progresses even during compound preparation or bonded magnet formation, often resulting in problems associated with reduction in pot life in production process or characteristics of a bonded magnet.
The compression molding requires heating for accelerating the curing reaction of the thermosetting resin. However, the magnetic particles in the compound are heat-labile, and magnetic particle surface is oxidized in a heating environment, easily causing reduction in magnetic characteristics.
Accordingly, there is a demand for a compound for a bonded magnet having high mechanical strength which can suppress the breakage of a bonded magnet in the reaction of a thermosetting resin under a low-temperature condition (e.g., 150°C or lower).
By contrast, a compound for a bonded magnet containing a curing accelerator having a borane structure and borate structure as disclosed in Patent Literature 1 described above is susceptible to improvement in mechanical strength in the curing reaction of a thermosetting resin under a lower-temperature condition, though having a given effect on reduction in pot life in a production process or characteristics of a bonded magnet.
A bonded magnet compound prepared by a production method in which an accelerator and a solvent satisfy predetermined configurations as disclosed in Patent Literature 2 described above, is susceptible to improvement in mechanical strength in the curing reaction of a thermosetting resin under a lower-temperature condition, though having a given effect on reduction in pot life in a production process or characteristics of a bonded magnet.

An object of the present invention is to provide a bonded magnet compound that has a long pot life in a production process, has little change in characteristics caused by heating at the time of bonded magnet formation, and also has high mechanical strength in the curing reaction of a thermosetting resin under a low-temperature condition.

## Solution to Problem

The present inventors have conducted diligent studies to attain the object mentioned above, and consequently completed the present invention by finding that the problems of the conventional techniques mentioned above can be solved by containing an epoxy resin, a curing agent, a magnetic particle, and a curing accelerator, wherein the curing accelerator satisfies a predetermined configuration.

Specifically, the present invention includes the following aspects.

<1> A compound including an epoxy resin (A), a metal element-containing particle (C), and a curing agent (D) having an imidazole structure, wherein

the curing agent (D) having an imidazole structure includes a compound represented by the following formula (1) and/or a compound represented by the following formula (2):

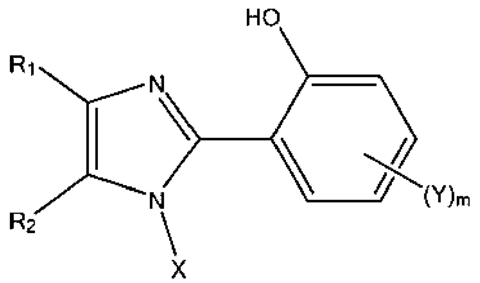

・・・・(1)

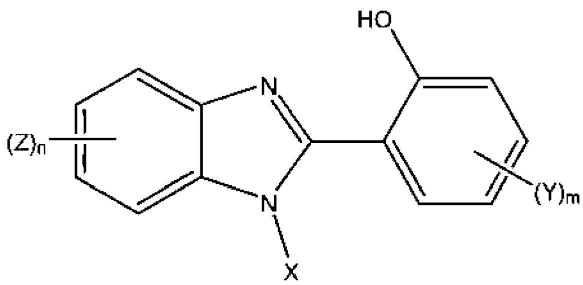

・・・・(2)

In the formulas (1) and (2), $R_1$ and $R_2$ are each independently any one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are the same as or different from each other, and $R_1$ and $R_2$ are optionally bonded to each other to form a condensed ring having no aromaticity;

X is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a heteroarylalkyl group having 4 to 20 carbon atoms and optionally having a substituent;

Y and Z are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and an acyl group having 1 to 20 carbon atoms and optionally having a substituent, Y and Z are the same as or different from each other, and two or more Y moieties or two or more Z moieties are optionally bonded to each other to form a monocyclic ring or a condensed ring; and m and n are each independently an integer of 1 to 4.

<2> The compound according to <1>, wherein

in the curing agent (D) having an imidazole structure,

each of Y and Z is one member selected from the group consisting of a hydrogen atom, a hydroxy group, a carboxy group, an alkoxy group having 1 to 20 carbon atoms and having no substituent, an alkyl group having 1 to 20 carbon atoms and having a hydroxy group and/or a carboxy group as a substituent, an alkoxy group having 1 to 20 carbon atoms and having a hydroxy group and/or a carboxy group as a substituent, an aryl group having 6 to 20 carbon atoms and having a hydroxy group and/or a carboxy group as a substituent, an aryloxy group having 6 to 20 carbon atoms and having a hydroxy group and/or a carboxy group as a substituent, and an acyl group having 1 to 20 carbon atoms and having a hydroxy group and/or a carboxy group as a substituent.

<3> The compound according to <1> or <2>, wherein

in the curing agent (D) having an imidazole structure,

the compound represented by the formula (1) is any member selected from the group consisting of 2-(2-hydroxyphenyl)imidazole, 2-(2-hydroxyphenyl)-4(5)-methylimidazole, 4-ethyl-(2-hydroxyphenyl)-5-methylimidazole, (2-hydroxyphenyl)-4-isopropyl-5-methylimidazole, 4-butyl-(2-hydroxyphenyl)-5-methylimidazole, and 2-(2-hydroxy-3(5)-methoxyphenyl)imidazole,
and/or

the compound represented by the formula (2) is any member selected from the group consisting of 2-(2-hydroxyphenyl)benzimidazole, 2-(2-hydroxy-3(5)-methoxyphenyl)benzimidazole, 2-(1-hydroxynaphthalen-2-yl)benzimidazole, 2-(2-hydroxynaphthalen-1-yl)benzimidazole, and 2-(2-hydroxyphenyl)benzimidazole-6-carboxylic acid.

<4> The compound according to <1> or <2>, further including
a curing agent (B) different from the curing agent having an imidazole structure.

<5> The compound according to <4>, wherein

the curing agent (B) different from the curing agent having an imidazole structure includes a curing agent that is in a solid state at room temperature (25°C), and

a content of the curing agent that is in a solid state at room temperature (25°C) is 50% by mass or more with respect to the total amount of the curing agent.

<6> The compound according to <1> or <2>, wherein the metal element-containing particle (C) is a magnetic particle.

<7> The compound according to <6>, wherein the magnetic particle is a rare earth magnetic particle.

<8> The compound according to <6>, wherein a content of the magnetic particle is 70% by mass or more and 99.5% by mass or less with respect to the total mass of the compound.

<9> The compound according to <6>, wherein a specific surface area of the magnetic particle is 0.005 $m^2/g$ or more and 5.0 $m^2/g$ or less.

<10> The compound according to <6>, wherein

when a content (% by mass) of the magnetic particle with respect to the total mass of the compound is defined as (X),

a specific surface area of the magnetic particle is defined as (Y), and

a content (% by mass) of the curing agent (D) having an imidazole structure with respect to the total mass of the compound is defined as (Z),

(X), (Y), and (Z) satisfy the following expression ($\gamma$):

$$0.000010 \leq (Z)/(X) \times (Y) \leq 0.30 \ldots (\gamma).$$

<11> The compound according to <1>, wherein the epoxy resin (A) has a partial structure represented by the following formula (A1):

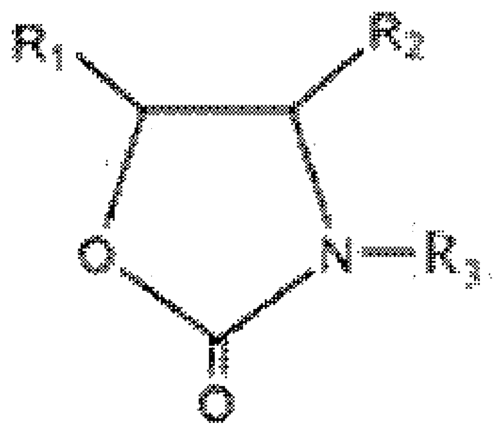

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D) having an imidazole structure, and $R_1$ to $R_3$ are the same as or different from each other.

<12> The compound according to <1>, wherein the epoxy resin (A) has a partial structure represented by the following formula (A2):

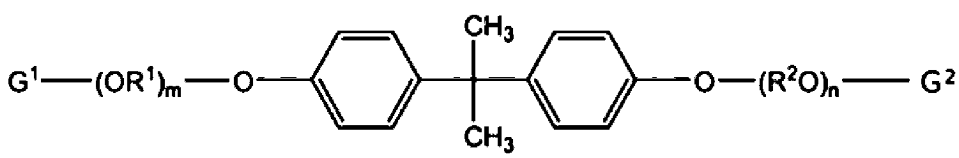

(A 2)

wherein each of $R^1$ and $R^2$ is an alkylene group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

<13> The compound according to <1> or <2>, wherein

the epoxy resin (A) includes an epoxy resin that is in a solid state at room temperature (25°C), and

a content of the epoxy resin that is in a solid state at room temperature (25°C) is 50% by mass or more with respect to the total amount of the epoxy resin.

<14> The compound according to <1> or <2>, further including a compound (E) represented by the following formula (3):

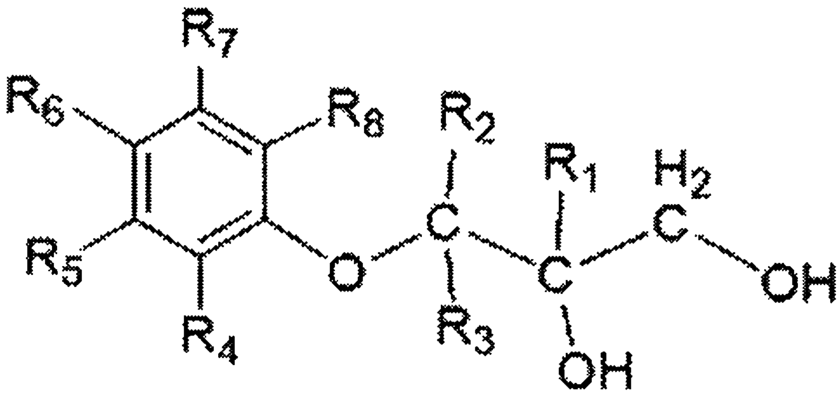

· · · · (3)

wherein $R_1$ to $R_8$ are each independently one member selected from the group consisting of hydrogen, an alkyl group, an aromatic group, a substituent containing a heteroatom, and a substituent containing a halogen atom, $R_1$ to $R_8$ are the same as or different from each other, and at least two moieties selected from $R_4$ to $R_8$ optionally form a ring to form a condensed ring with the adjacent benzene ring.

<15> A varnish including an epoxy resin (A), a curing agent (D) having an imidazole structure, a curing agent (B) different from the curing agent having an imidazole structure, and an organic solvent (G), wherein the curing agent (D) having an imidazole structure includes a compound represented by the following formula (1) and/or a compound represented by the following formula (2):

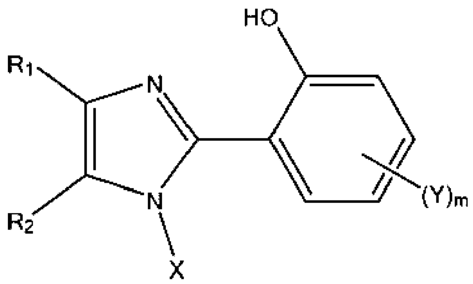

· · · · (1)

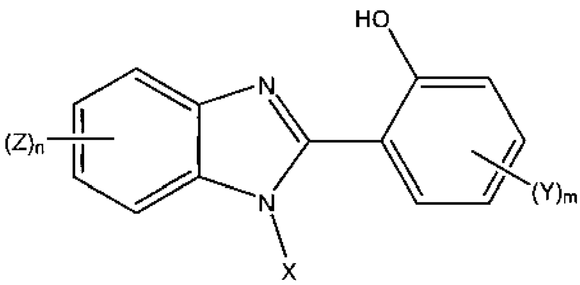

· · · · (2)

In the formulas (1) and (2), $R_1$ and $R_2$ are each independently any one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are the same as or different from each other, and $R_1$ and $R_2$ are optionally bonded to each other to form a condensed ring having no aromaticity;

X is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a heteroarylalkyl group having 4 to 20 carbon atoms and optionally having a substituent;

Y and Z are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and

an acyl group having 1 to 20 carbon atoms and optionally having a substituent, Y and Z are the same as or different from each other, and two or more Y moieties or two or more Z moieties are optionally bonded to each other to form a monocyclic ring or a condensed ring; and m and n are each independently an integer of 1 to 4.

<16> A bonded magnet obtained by molding and curing the compound according to any one of <1> to <16>.

<17> A motor including the bonded magnet according to <16>.

## Advantageous Effect of Invention

The present invention can provide a compound that has a long pot life in a production process, has little change in characteristics caused by heating at the time of bonded magnet formation, and also has high mechanical strength in the curing reaction of a thermosetting resin under a low-temperature condition.

## Description of Embodiments

Hereinafter, the mode for carrying out the present invention (hereinafter, referred to as the "present embodiment") will be described in detail.

The present embodiment described below is given for illustrating the present invention and does not intend to limit the present invention to the embodiments given below. The present invention can be carried out through appropriate changes or modifications made without departing from the spirit of the present invention.

In the present embodiment, a numeric range represented by using "to" means a range including the numeric values described before and after "to" as the minimum value and the maximum value, respectively.

In numeric ranges described in stages in the present embodiment, the upper limit value or the lower limit value of a numeric range at a certain stage may be replaced with the upper limit value or the lower limit value of a numeric range at a different stage. In numeric ranges described in the present disclosure, the upper limit value or the lower limit value described in a certain numeric range may be replaced with a value described in Examples.

In the present embodiment, a combination of two or more preferred aspects is a more preferred aspect.

In the present embodiment, the amount of each component means the total amount of a plurality of substances, unless otherwise specified, if the plurality of substances correspond to the component.

<<Bonded magnet compound>>

The compound of the present embodiment includes an epoxy resin (A), a metal element-containing particle (C), and a curing agent (D).

A mixture of the epoxy resin (A) and the curing agent (D) (hereinafter, simply referred to as a "resin composition") causes curing reaction to progress in association with heat treatment and forms a three-dimensional cross-linkage around the metal element-containing particle (C). Therefore, a bonded magnet cured product exerts high mechanical strength.

<Epoxy resin (A)>

The compound of the present embodiment includes an epoxy resin.

Examples of the epoxy resin include, but are not limited to, biphenyl-type epoxy resin, stilbene-type epoxy resin, diphenylmethane-type epoxy resin, sulfur atom-containing epoxy resin, novolac-type epoxy resin such as phenol novolac-type epoxy resin, cresol novolac-type epoxy resin, biphenyl novolac-type epoxy resin, and naphthol novolac-type epoxy resin, dicyclopentadiene-type epoxy resin, salicylaldehyde-type epoxy resin such as salicylaldehyde novolac-type epoxy resin, copolymer-type epoxy resin of naphthols and phenols, epoxidation products of aralkyl-type phenol resin, bisphenol-type epoxy resin, glycidyl ether-type epoxy resin of alcohols, glycidyl ether-type epoxy resin of paraxylylene- and/or metaxylylene-modified phenol resin, glycidyl ether-type epoxy resin of terpene-modified phenol resin, cyclopentadiene-type epoxy resin, glycidyl ether-type epoxy resin of polycyclic aromatic ring-modified phenol resin, glycidyl ether-type epoxy resin of naphthalene ring-containing phenol resin, glycidyl ester-type epoxy resin, glycidyl-type or methyl glycidyl-type epoxy resin, alicyclic epoxy resin, halogenated phenol novolac-type epoxy resin, hydroquinone-type epoxy resin, trimethylolpropane-type epoxy resin, linear aliphatic epoxy resin obtained by oxidizing an olefin bond with a peracid such as peracetic acid, epoxy resins having a partial structure represented by the formula (A1) given below, and epoxy resins having a partial structure represented by the formula (A2) given below. One of these epoxy resins may be used singly, or two or more thereof may be used in combination.

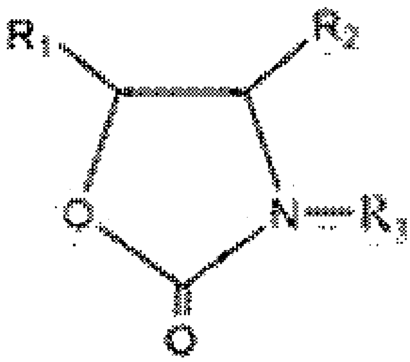

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D) having an imidazole structure, and $R_1$ to $R_3$ are the same as or different from each other.

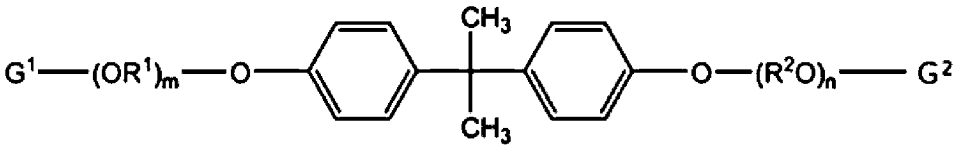

(A 2)

wherein each of $R^1$ and $R^2$ is an alkylene group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

The epoxy resin preferably includes at least one member selected from the group consisting of biphenyl-type epoxy resin, orthocresol novolac-type epoxy resin, phenol novolac-type epoxy resin, biphenyl novolac-type epoxy resin, salicylaldehyde novolac-type epoxy resin, naphthol novolac-type epoxy resin, an epoxy resin having a partial structure represented by the formula (A1) given below, and an epoxy resin having a partial structure represented by the formula (A2) given below, from the viewpoint of enhancing the mechanical strength of a bonded magnet. Among them, the epoxy resin more preferably includes at least one member selected from the group consisting of an epoxy resin having a partial structure represented by the following formula (A1), and an epoxy resin having a partial structure represented by the following formula (A2).

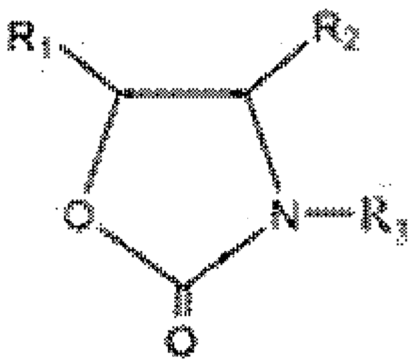

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D) having an imidazole structure, and $R_1$ to $R_3$ are the same as or different from each other.

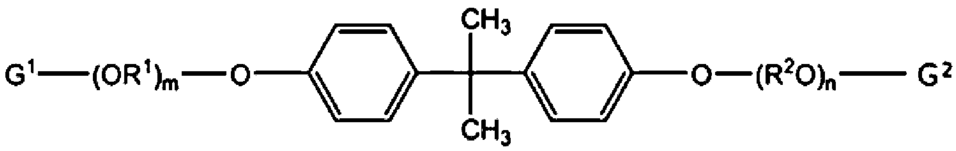

(A 2)

wherein each of $R^1$ and $R^2$ is an alkylene group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

The alkylene group having 1 to 12 carbon atoms represented by each of $R^1$ and $R^2$ may be linear or branched, and the number of carbon atoms in the alkylene group is preferably 1 to 10, more preferably 1 to 6. Examples of the alkylene group having 1 to 12 carbon atoms include $-CH_2-$, $-CH_2-CH_2-$, $-CH(CH_3)-$, $-CH_2-CH_2-CH_2-$, $-CH_2-CH(CH_3)-$, $-CH(CH_3)-CH_2-$, and $-C(CH_3)_2-$.

The alkyl group represented by each of $G^1$ and $G^2$ may be linear or branched, and the number of carbon atoms in the alkyl group is preferably 1 to 18, more preferably 1 to 15, further preferably 1 to 10. Examples of the alkyl group include a methyl group, an ethyl group, an isopropyl group, a butyl group, an isobutyl group, a hexyl group, an octyl group, and a 2-ethylhexyl group.

The epoxy resin preferably includes at least one epoxy resin having crystallinity, from the viewpoint of enhancing the fluidity of the compound. The epoxy resin having crystallinity has a melting point and can exert excellent fluidity because of being not softened in a temperature range of lower than the melting point.

Examples of the epoxy resin having crystallinity include hydroquinone-type epoxy resin, bisphenol-type epoxy resin, thioether-type epoxy resin, biphenyl novolac-type epoxy resin, and biphenyl-type epoxy resin.

Examples of a commercially available product of the epoxy resin having crystallinity include EPICLON 860, EPICLON 1050, EPICLON 1055, EPICLON 2050, EPICLON 3050, EPICLON 4050, EPICLON 7050, EPICLON HM-091, EPICLON HM-101, EPICLON N-730A, EPICLON N-740, EPICLON N-770, EPICLON N-775, EPICLON N-865, EPICLON HP-4032D, EPICLON HP-7200L, EPICLON HP-7200, EPICLON HP-7200H, EPICLON HP-7200HH, EPICLON HP-7200HHH, EPICLON HP-4700, EPICLON HP-4710, EPICLON HP-4770, EPICLON HP-5000, EPICLON HP-6000, and N500P-2 (all are trade names of products manufactured by DIC Corp.), NC-3000, NC-3000-L, NC-3000-H, NC-3100, CER-3000-L, NC-2000-L, XD-1000, NC-7000-L, NC-7300-L, EPPN-501H, EPPN-501HY, EPPN-502H, EOCN-1020, EOCN-102S, EOCN-103S, EOCN-104S, CER-1020, EPPN-201, BREN-S, BREN-10S (all are trade names of products manufactured by Nippon Kayaku Co., Ltd.), and YX-4000, YX-4000H, YL4121H, and YX-8800 (all are trade names of products manufactured by Mitsubishi Chemical Corp.).

The epoxy resin (A) according to the present embodiment preferably includes an epoxy resin that is in a solid state at room temperature (25°C).

The content of the epoxy resin that is in a solid state at room temperature (25°C) is preferably 50% by mass or more, more preferably 75% by mass or more, further preferably 95% by mass or more, with respect to the total amount of the epoxy resin. The epoxy resin (A) satisfies the configuration described above, whereby blocking can be suppressed during compound storage.

The content of the epoxy resin (A) is preferably 0.3% by mass or more and 20% by mass or less, more preferably 0.5% by mass or more and 15% by mass or less, further preferably 0.8% by mass or more and 10% by mass or less, with respect to the total mass of the bonded magnet compound. The content of the epoxy resin satisfies the range described above, whereby both of the magnetic characteristics and mechanical strength of a bonded magnet can be achieved.

The content of the epoxy resin is preferably 0.5% by volume or more and 40% by volume or less, more preferably 0.8% by volume or more and 30% by volume or less, further preferably 1.0% by volume or more and 20% by volume or less, with respect to the total volume of the bonded magnet compound. The content of the epoxy resin satisfies the range described above, whereby both of the magnetic characteristics and mechanical strength of a bonded magnet can be achieved.

<Curing agent (B) different from curing agent having imidazole structure>

The compound of the present embodiment preferably includes a curing agent (B) different from the curing agent (D) having an imidazole structure.

Examples of the curing agent (B) different from the curing agent having an imidazole structure include, but are not limited to, aliphatic polyamine, polyaminoamide, polymercaptan, aromatic polyamine, acid anhydrides, phenol resins, and dicyandiamide (DICY).

Aromatic polyamine, an acid anhydride, a phenol resin, or dicyandiamide (DICY) is preferably used as the curing agent (B) different from the curing agent having an imidazole structure, from the viewpoint of enhancing the heat resistance of a bonded magnet. Among them, a phenol resin is more preferably used.

Examples of the aromatic polyamine include diaminodiphenylmethane, m-phenylenediamine, diaminodiphenylsulfone, diethyltoluenediamine, trimethylenebis(4-aminobenzoate), and polytetramethylene oxide-di-p-aminobenzoate. A commercially available product may be used as the aromatic polyamine. Examples thereof include KAYAHARD A-A (manufactured by Nippon Kayaku Co., Ltd.) and ETHACURE 100 (manufactured by Mitsui Fine Chemicals, Inc.).

Examples of the acid anhydride include phthalic anhydride, trimellitic anhydride, pyromellitic anhydride, maleic

anhydride, tetrahydrophthalic anhydride, methyltetrahydrophthalic anhydride, methylnadic anhydride, hexahydrophthalic anhydride, and methylhexahydrophthalic anhydride.

Examples of the phenol resin include aralkyl-type phenol resin, dicyclopentadiene-type phenol resin, salicylaldehyde-type phenol resin, novolac-type phenol resin, copolymer-type phenol resin of benzaldehyde-type phenol and aralkyl-type phenol, paraxylylene- and/or metaxylylene-modified phenol resin, melamine-modified phenol resin, terpene-modified phenol resin, dicyclopentadiene-type naphthol resin, cyclopentadiene-modified phenol resin, polycyclic aromatic ring-modified phenol resin, biphenyl-type phenol resin, and triphenylmethane-type phenol resin. The phenol resin may be a copolymer constituted by two or more of those described above.

The phenol resin is preferably novolac-type phenol resin from the viewpoint of enhancing the heat resistance of a bonded magnet.

Examples of the novolac-type phenol resin include resins obtained by condensing or co-condensing phenols and/or naphthols and aldehydes in the presence of an acidic catalyst. Examples of the phenol constituting the novolac-type phenol resin include phenol, cresol, xylenol, resorcinol, catechol, bisphenol A, bisphenol F, phenylphenol, and aminophenol. Examples of the naphthol constituting the novolac-type phenol resin include $\alpha$-naphthol, $\beta$-naphthol, and dihydroxynaphthalene. Examples of the aldehyde constituting the novolac-type phenol resin include formaldehyde, acetaldehyde, propionaldehyde, benzaldehyde, and salicylaldehyde.

For example, a compound having two phenolic hydroxy group in one molecule can be used as the curing agent (B) different from the curing agent having an imidazole structure. Examples of the compound having two phenolic hydroxy group in one molecule include resorcinol, catechol, bisphenol A, bisphenol F, and substituted or unsubstituted biphenol.

One of the curing agents described above may be used singly, or two or more thereof may be used in combination.

The ratio of an active group (phenolic OH group) in the curing agent reactive with an epoxy group in the epoxy resin is preferably 0.5 to 1.5 equivalents, more preferably 0.7 to 1.4 equivalents, further preferably 0.8 to 1.3 equivalents, with respect to 1 equivalent of the epoxy group in the epoxy resin.

The ratio of the active group in the curing agent satisfies the range described above, whereby the mechanical characteristics and heat resistance of a bonded magnet can be enhanced.

The curing agent (B) different from the curing agent having an imidazole structure according to the present embodiment preferably includes a curing agent that is in a solid state at room temperature (25°C).

The content of the curing agent that is in a solid state at room temperature (25°C) is preferably 50% by mass or more, more preferably 75% by mass or more, further preferably 95% by mass or more, with respect to the total amount of the curing agent. The curing agent satisfies the configuration described above, whereby blocking can be suppressed during compound storage.

The content of the curing agent (B) different from the curing agent having an imidazole structure is preferably 0.3% by mass or more and 20% by mass or less, more preferably 0.5% by mass or more and 15% by mass or less, further preferably 0.8% by mass or more and 10% by mass or less, with respect to the total mass of the bonded magnet compound. The content of the curing agent (B) different from the curing agent having an imidazole structure satisfies the range described above, whereby both of the magnetic characteristics and mechanical strength of a bonded magnet can be achieved.

The content of the curing agent (B) different from the curing agent having an imidazole structure is preferably 0.5% by volume or more and 40% by volume or less, more preferably 0.8% by volume or more and 30% by volume or less, further preferably 1.0% by volume or more and 20% by volume or less, with respect to the total volume of the bonded magnet compound. The content of the curing agent (B) different from the curing agent having an imidazole structure satisfies the range described above, whereby both of the magnetic characteristics and mechanical strength of a bonded magnet can be achieved.

<Metal element-containing particle (C)>

The compound of the present embodiment includes a metal element-containing particle.

The metal element-containing particle may contain at least one member selected from the group consisting of, for example, a single metal, an alloy, and a metal compound. The metal element-containing particle may consist of at least one member selected from the group consisting of, for example, a single metal, an alloy, and a metal compound. The alloy may include at least one member selected from the group consisting of a solid solution, a cocrystal, and an intermetallic compound. The alloy can be, for example, stainless steel (Fe-Cr-based alloy, Fe-Ni-Cr-based alloy, etc.). The metal compound can be, for example, an oxide such as ferrite. The metal element-containing particle can contain one metal element or a plurality of metal elements. The metal element contained in the metal element-containing particle can be, for example, a base metal element, a noble metal element, a transition metal element, or a rare earth element. The metal element contained in the metal element-containing particle can be at least one member selected from the group consisting of, for example, iron (Fe), copper (Cu), titanium (Ti), manganese (Mn), cobalt (Co), nickel (Ni), zinc (Zn), aluminum (Al), tin

(Sn), chromium (Cr), barium (Ba), strontium (Sr), lead (Pb), silver (Ag), praseodymium (Pr), neodymium (Nd), samarium (Sm), and dysprosium (Dy). The metal element-containing particle may contain an element other than the metal element. The metal element-containing particle may contain, for example, oxygen (O), beryllium (Be), phosphorus (P), boron (B), or silicon (Si).

One type of metal element-containing particle may be used singly, or two or more types thereof may be used in combination. In the case of mixing two or more types of metal element-containing particles, two or more types of metal element-containing particles differing in composition, particle size (particle size distribution), shape, specific surface area, characteristics (isotropy or anisotropy), surface treatment, or the like can be used as a mixture.

The alloy composition of the metal element-containing particle is not limited as long as the curing characteristics of the resin composition are not reduced.

The metal element-containing particle is preferably a magnetic particle.

For example, a samarium-cobalt (Sm-Co)-based alloy particle (rare earth magnetic particle), a neodymium-iron-boron (Nd-Fe-B)-based alloy particle (rare earth magnetic particle), a samarium-iron-nitrogen (Sm-Fe-N)-based alloy particle (rare earth magnetic particle), an iron-cobalt (Fe-Co)-based alloy particle, an Al-Ni-Co-based alloy particle, or a ferrite magnet particle can be used as the magnetic particle.

The magnetic particle of the present embodiment is preferably a rare earth magnetic particle.

In the present embodiment, the rare earth magnetic particle means a magnetic particle containing a rare earth element.

The rare earth magnetic particle, compared with other magnetic particles, is excellent in coercivity and magnetic flux density and can enhance, for example, the magnetism of a bonded magnet.

The shape of the magnetic particle is not particularly limited, and spherical, flat-shaped, prism-shaped, and needle-like magnetic particles and the like can be used each singly or in combination. The shape of the magnetic particle can be evaluated from a circularity coefficient measured by the image processing of a microscopic observation image. The circularity coefficient is a value defined according to an expression given below, and a higher numeric value means that the particle gets rounder and closer to a spheric shape. It is preferred to include at least one or more types of magnetic particles having a circularity coefficient of 0.60 or more, from the viewpoint of facilitating rotating the magnetic particle during molding in a magnetic field and being able to improve orientation.

$$\text{Circularity coefficient} = (4\pi S/L^2)$$

Provided that S is the two-dimensional projected area of the particle, and L is the two-dimensional projected perimeter thereof.

As for the particle size (particle size distribution) of the magnetic particle, coarse magnetic particles (hereinafter, simply referred to as "rough particles") and fine magnetic particles (hereinafter, simply referred to as "fine particles") can be used each singly or in combination.

The average particle size (D50) of the coarse particles is preferably 30 μm or larger and 300 μm or smaller, more preferably 40 μm or larger and 250 μm or smaller. Since the coarse particles have high magnetic characteristics, the magnetic characteristics of a bonded magnet can be adjusted depending on the amount of the coarse particles added.

The average particle size (D50) of the fine particles is preferably 0.5 μm or larger and 30 μm or smaller, more preferably 1 μm or larger and 20 μm or smaller. The fine particles can enhance the amount of the filling magnetic particle and achieves improvement in magnetic characteristics.

The average particle size and particle size distribution of the magnetic particle are measured with a laser diffraction particle size distribution measurement apparatus (HELOS manufactured by Japan Laser Corp.).

The specific surface area of the magnetic particle is preferably 0.005 $m^2/g$ or more and 5.0 $m^2/g$ or less, more preferably 0.01 $m^2/g$ or more and 1.5 $m^2/g$ or less, further preferably 0.03 $m^2/g$ or more and 1.3 $m^2/g$ or less, particularly preferably 0.05 $m^2/g$ or more and 1.0 $m^2/g$ or less.

The magnetic particle satisfies the configuration described above, whereby both the magnetic characteristics and mechanical strength of a bonded magnet can be achieved, and in addition, the fluidity of the compound can be enhanced.

Examples of the method for controlling the specific surface area of the magnetic particle include a method of making adjustment by changing the shape or average particle size of the magnetic particle. In the case of using plural types of magnetic particles in combination, a specific surface area after mixing of the magnetic particles can be adjusted to the range described above.

The specific surface area is measured with a mixed gas of $N_2$/He = 30/70 (volume ratio) as an adsorption gas using a BET specific surface area measurement apparatus.

In the case of involving two or more types of magnetic particles, the specific surface area is calculated as an average value of the whole magnetic particles on the basis of the specific surface area and content ratio of each magnetic

particle.

The characteristics of the magnetic particle are not particularly limited, and anisotropic magnetic particles and isotropic magnetic particles can be used each singly or in combination. Magnetic characteristics can be improved by preparing the compound using anisotropic magnetic particles, and orienting the magnetic particles in a bonded magnet molded product by molding in a magnetic field.

The magnetic particle is preferably rust-proofed. Examples of the rust-proofing treatment include phosphoric acid treatment that forms a phosphoric acid compound layer, metal alkoxide oligomer treatment that forms an organometallic compound layer, coupling treatment that forms a coupling agent layer, and slow oxidation treatment that forms an oxide film. The rust-proofing treatment may be performed by a single treatment or by a combination of a plurality of treatments.

The content of the magnetic particle is preferably 70% by mass or more and 99.5% by mass or less, more preferably 80% by mass or more and 99.0% by mass or less, further preferably 90% by mass or more and 98.5% by mass or less, with respect to the total mass of the bonded magnet compound. The content of the magnetic particle satisfies the range described above, whereby both the magnetic characteristics and mechanical strength of a bonded magnet can be achieved.

<Curing agent (D) having imidazole structure>

The compound of the present embodiment includes a compound represented by the formula (1) and/or a compound represented by the formula (2) as the curing agent (D) having an imidazole structure.

The compound of the present embodiment satisfies the configuration described above and thereby, surprisingly, can have a long pot life in a production process, have little change in characteristics caused by heating at the time of bonded magnet formation, and confer high mechanical strength in the curing reaction of a thermosetting resin under a low-temperature condition. Such effects cannot be easily predicted from the structure or the like of the curing agent (D) having an imidazole structure.

The present inventor has further tested effects of imidazole compounds having various structures in a process leading to the compound of the present embodiment, and found that the curing agent (D) having an imidazole structure according to the present embodiment is optimal as a compound that confers the effects described above. The mechanism of the effects described above is presumably based on the following.

The curing agent (D) having an imidazole structure according to the present embodiment is a compound having an imidazole structure. In general, a nitrogen atom on an imidazole compound is known to have the ability to coordinate with metals. When the imidazole compound coexists with metal element-containing particles (magnetic particles), the nitrogen atom of the imidazole compound is considered to be adsorbed to the metal element-containing particles (magnetic particles). Accordingly, in the case of preparing a compound using imidazole compounds having various structures, the imidazole compounds in the compound can densely accumulate near the surface of the metal element-containing particles (magnetic particles), thereby reducing the dispersibility of the imidazole compounds.

On the other hand, the compounds represented by the formulas (1) and (2) each have a structure where position 2 of imidazole in the imidazole structure is substituted by a hydroxyphenyl group. A nitrogen atom serving as an active site of imidazole forms an intramolecular hydrogen bond with the adjacent hydroxyphenyl group, whereby it is considered that the nucleophilicity of the nitrogen atom on imidazole is suppressed in a low-temperature environment (e.g., at lower than 120°C) so that the imidazole compounds are uniformly dispersed in the compound. In addition, nucleophilicity for an epoxy group is also suppressed. Therefore, a pot life in a production process is excellent, and change in characteristics at the time of bonded magnet formation can also be suppressed.

When a bonded magnet is cured (e.g., at 120°C or higher), intramolecular hydrogen bonds are gradually dissociated with elevation in temperature of the compound so that some compounds represented by the formulas (1) and (2) are presumably adsorbed to metal element-containing particles (magnetic particles). As a result, in the case of preparing a cured product of a bonded magnet using the compounds represented by the formulas (1) and (2), the compounds represented by the formulas (1) and (2) can selectively elevate their concentrations near the surface of the metal element-containing particles (magnetic particles) while dispersed in the whole compound system. Accordingly, a cross-link density, particularly, near the surface of the metal element-containing particles (magnetic particles), can be elevated while the curing strength of the whole bonded magnet is maintained.

Usually, the mechanical strength of a composite material (containing a resin component, magnetic particles, etc.) tends to be weakest at the interface between materials. However, use of the compounds represented by the formulas (1) and (2) presumably elevates a cross-link density at the interface and can also confer high mechanical strength in the curing reaction of a thermosetting resin under a low-temperature condition.

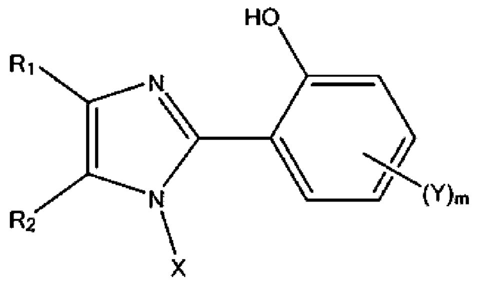

・・・・(1)

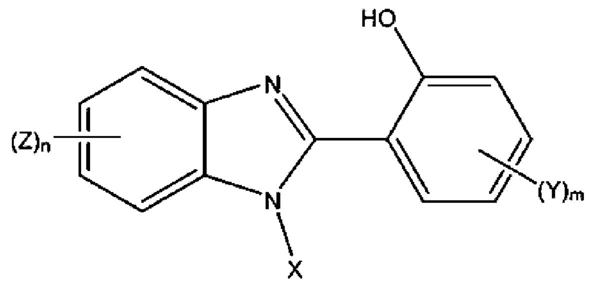

・・・・(2)

In the formulas (1) and (2), $R_1$ and $R_2$ are each independently any one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are the same as or different from each other, and $R_1$ and $R_2$ are optionally bonded to each other to form a condensed ring having no aromaticity.

X is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a heteroarylalkyl group having 4 to 20 carbon atoms and optionally having a substituent.

Y and Z are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and an acyl group having 1 to 20 carbon atoms and optionally having a substituent, Y and Z are the same as or different from each other, and two or more Y moieties or two or more Z moieties are optionally bonded to each other to form a monocyclic ring or a condensed ring; and m and n are each independently an integer of 1 to 4.

$R_1$ and $R_2$ in the formula (1) are, as mentioned above, each independently one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are optionally bonded to each other to form a condensed ring having no aromaticity, and $R_1$ and $R_2$ are the same as or different from each other.

The alkyl group having 1 to 20 carbon atoms may be linear or branched, and the number of carbon atoms in the alkyl group is preferably 1 to 18, more preferably 1 to 15, further preferably 1 to 10. Examples of the alkyl group having 1 to 20 carbon atoms include a methyl group, an ethyl group, an isopropyl group, a butyl group, an isobutyl group, a hexyl group, an octyl group, and a 2-ethylhexyl group.

The number of carbon atoms in the cycloalkyl group having 6 to 20 carbon atoms is preferably 6 to 18, more preferably 6 to 15. Examples of the cycloalkyl group having 6 to 20 carbon atoms include a cyclohexyl group, a cycloheptane group, and a cyclooctane group.

Examples of the condensed ring having no aromaticity which may be formed by $R_1$ and $R_2$ bonded to each other specifically include cyclopentane, cyclohexane, and dicyclopentadiene.

The alkyl group, the cycloalkyl group, and the condensed ring having no aromaticity which may be formed by $R_1$ and $R_2$ bonded to each other may each have a substituent. Examples of the substituent include a halogen atom, a hydroxy group, an alkoxy group, and a nitro group. The substituent is preferably a hydroxy group or an alkoxy group.

X in the formulas (1) and (2) is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a

heteroarylalkyl group having 4 to 20 carbon atoms and optionally having a substituent.

The alkyl group having 1 to 20 carbon atoms as X may be linear or branched, and the number of carbon atoms in the alkyl group is preferably 1 to 18, more preferably 1 to 15. Examples of the alkyl group having 1 to 20 carbon atoms include a methyl group, an ethyl group, an isopropyl group, a butyl group, an isobutyl group, a hexyl group, and an octyl group.

The alkenyl group having 2 to 20 carbon atoms as X may be linear or branched, and the number of carbon atoms in the alkenyl group is preferably 2 to 18, more preferably 2 to 15. Examples of the alkenyl group having 2 to 20 carbon atoms include a vinyl group, an aryl group, a 1-propenyl group, an isopropenyl group, a 2-butenyl group, a 3-butenyl group, a 2-pentenyl group, and a 2-hexenyl group.

The aralkyl group having 7 to 20 carbon atoms as X may be linear or branched, and the number of carbon atoms in the aralkyl group is preferably 7 to 18, more preferably 7 to 15. Examples of the aralkyl group having 7 to 20 carbon atoms include a benzyl group, a phenethyl group, and a naphthylmethyl group.

The heteroarylalkyl group having 4 to 20 carbon atoms as X may be linear or branched, and the number of carbon atoms in the heteroarylalkyl group is preferably 4 to 18, more preferably 4 to 15. Examples of the heteroarylalkyl group having 4 to 20 carbon atoms include a triazinylmethyl group, a triazinylethyl group, a 2-pyridylmethyl group, a 2-pyridylethyl group, a 3-pyridylmethyl group, a 3-pyridylethyl group, a 4-pyridylmethyl group, and a 4-pyridylethyl group.

The alkyl group, the alkenyl group, the aralkyl group, and the heteroarylalkyl group may have a substituent. Examples of the substituent include a halogen atom, a cyano group, a nitro group, a hydroxy group, an alkoxy group, an amino group, an ester group, an arylsulfonyl group, an alkylsulfonyl group, and a phenyl group. The substituent is preferably a cyano group, an alkoxy group, an amino group, an ester group, and a phenyl group.

Y and Z in the formulas (1) and (2) are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and an acyl group having 1 to 20 carbon atoms and optionally having a substituent, two or more Y moieties or two or more Z moieties are optionally bonded to each other to form a monocyclic ring or a condensed ring, and m and n are each independently an integer of 1 to 4.

The alkyl group having 1 to 20 carbon atoms as Y or Z may be linear or branched, and the number of carbon atoms in the alkyl group is preferably 1 to 18, more preferably 1 to 15. Examples of the alkyl group having 1 to 20 carbon atoms include a methyl group, an ethyl group, a propyl group, an isopropyl group, a butyl group, an isobutyl group, a hexyl group, an octyl group, a 2-ethylhexyl group, a decyl group, and an undecyl group.

The alkoxy group having 1 to 20 carbon atoms as Y and Z may be linear or branched, and the number of carbon atoms is preferably 1 to 18, more preferably 1 to 15. Examples of the alkoxy group having 1 to 20 carbon atoms include a methoxy group, an ethoxy group, a propoxy group, an isopropoxy group, a butoxy group, a hexyloxy group, and a 2-ethylhexyloxy group.

The alkenyl group having 2 to 20 carbon atoms as Y and Z may be linear or branched, and the number of carbon atoms in the alkenyl group is preferably 2 to 18, more preferably 2 to 15. Examples of the alkenyl group having 2 to 20 carbon atoms include a vinyl group, an aryl group, a 1-propenyl group, an isopropenyl group, a 2-butenyl group, a 3-butenyl group, a 2-pentenyl group, and a 2-hexenyl group.

The number of carbon atoms in the aryl group having 6 to 20 carbon atoms as Y and Z is preferably 6 to 18, more preferably 6 to 15. Examples of the aryl group having 6 to 20 carbon atoms include a phenyl group, a naphthyl group, an anthracenyl group, and a biphenyl group.

Examples of the structure where two or more Y moieties or two or more Z moieties are bonded to each other to form a monocyclic ring or a condensed ring include a naphthyl group and an anthracenyl group.

The number of carbon atoms in the acyl group having 1 to 20 carbon atoms as Y and Z is preferably 1 to 18, more preferably 1 to 15. Examples of the acyl group having 1 to 20 carbon atoms include an acetyl group, a benzoyl group, and a pivaloyl group.

The alkyl group, the alkoxy group, the alkenyl group, the aryl group, the aryloxy group, and the acyl group may each have a substituent. Examples of the substituent include an alkyl group, a halogen atom, a hydroxy group, a carboxy group, an alkoxy group, a nitro group, an ester group, and a phenyl group. The substituent is preferably an alkyl group, a hydroxy group, a carboxy group, and an alkoxy group.

Y may be substituted at any of the ortho, meta, and para positions of the substituent phenyl group at position 2 of imidazole and, in the case of having a substituent, is preferably substituted at a position other than the ortho position, more preferably substituted at least at the meta position, and further preferably substituted at the meta position by a hydroxy group or an alkoxy group having 1 to 20 carbon atoms and optionally having a substituent.

Among those described above, Y and Z in the formulas (1) and (2) are each independently more preferably one member selected from the group consisting of a hydrogen atom, a hydroxy group, a carboxy group, an alkoxy group having

1 to 20 carbon atoms and having no substituent, an alkyl group having 1 to 20 carbon atoms and having a hydroxy group and/or a carboxy group as a substituent, an alkoxy group having 1 to 20 carbon atoms and having a hydroxy group and/or a carboxy group as a substituent, an aryl group having 6 to 20 carbon atoms and having a hydroxy group and/or a carboxy group as a substituent, an aryloxy group having 6 to 20 carbon atoms and having a hydroxy group and/or a carboxy group as a substituent, an acyl group having 1 to 20 carbon atoms and having a hydroxy group and/or a carboxy group as a substituent.

When Y and Z are each independently a hydroxy group, a carboxy group, an alkoxy group having 1 to 20 carbon atoms and having no substituent, an alkyl group having 1 to 20 carbon atoms and having a hydroxy group and/or a carboxy group as a substituent, an alkoxy group having 1 to 20 carbon atoms and having a hydroxy group and/or a carboxy group as a substituent, an aryl group having 6 to 20 carbon atoms and having a hydroxy group and/or a carboxy group as a substituent, an aryloxy group having 6 to 20 carbon atoms and having a hydroxy group and/or a carboxy group as a substituent, or an acyl group having 1 to 20 carbon atoms and having a hydroxy group and/or a carboxy group as a substituent, coordination bondability to the metal element-containing particle is increased: thus, the mechanical strength of a bonded magnet tends to be able to be improved.

Examples of the compound represented by the formula (1) include, but are not limited to, the following imidazole compounds:

2-(2-hydroxyphenyl)imidazole, 2-(2-hydroxyphenyl)-4(5)-methylimidazole, 4(5)-ethyl-2-(2-hydroxyphenyl)imidazole, 4,5-dimethyl-2-(2-hydroxyphenyl)imidazole, 4-ethyl-(2-hydroxyphenyl)-5-methylimidazole, (2-hydroxyphenyl)-4-isopropyl-5-methylimidazole, 4-butyl-(2-hydroxyphenyl)-5-methylimidazole, 2-(2-hydroxy-3-methylphenyl)imidazole, 2-(2-hydroxy-3-methylphenyl)-4(5)-methylimidazole, 4(5)-ethyl-2-(2-hydroxy-3-methylphenyl)imidazole, 4,5-dimethyl-2-(2-hydroxy-3-methylphenyl)imidazole, 4-ethyl-(2-hydroxy-3-methylphenyl)-5-methylimidazole, (2-hydroxy-3-methylphenyl)-4-isopropyl-5-methylimidazole, 4-butyl-(2-hydroxy-3-methylphenyl)-5-methylimidazole, 2-(2-hydroxy-4-methylphenyl)imidazole, 2-(2-hydroxy-4-methylphenyl)-4(5)-methylimidazole, and 4(5)-ethyl-2-(2-hydroxy-4-methylphenyl)imidazole.

Other examples thereof include 4,5-dimethyl-2-(2-hydroxy-4-methylphenyl)imidazole, 4-ethyl-(2-hydroxy-4-methylphenyl)-5-methylimidazole, (2-hydroxy-4-methylphenyl)-4-isopropyl-5-methylimidazole, 4-butyl-(2-hydroxy-4-methylphenyl)-5-methylimidazole, 2-(2-hydroxy-5-methylphenyl)imidazole, 2-(2-hydroxy-5-methylphenyl)-4(5)-methylimidazole, 4(5)-ethyl-2-(2-hydroxy-5-methylphenyl)imidazole, 4,5-dimethyl-2-(2-hydroxy-5-methylphenyl)imidazole, 4-ethyl-(2-hydroxy-5-methylphenyl)-5-methylimidazole, (2-hydroxy-5-methylphenyl)-4-isopropyl-5-methylimidazole, 4-butyl-(2-hydroxy-5-methylphenyl)-5-methylimidazole, 2-(3-t-butyl-2-hydroxyphenyl)imidazole, 2-(3-t-butyl-2-hydroxyphenyl)-4(5)-methylimidazole, and 2-(3-t-butyl-2-hydroxyphenyl)-4(5)-ethylimidazole.

Further examples thereof include 2-(3-t-butyl-2-hydroxyphenyl)-4,5-dimethylimidazole, 2-(3-t-butyl-2-hydroxyphenyl)-4-ethyl-5-methylimidazole, 2-(3-t-butyl-2-hydroxyphenyl)-4-isopropyl-5-methylimidazole, 4-butyl-2-(3-t-butyl-2-hydroxyphenyl)-5-methylimidazole, 2-(4-fluoro-2-hydroxyphenyl)imidazole, 2-(4-fluoro-2-hydroxyphenyl)-4(5)-methylimidazole, 2-(4-fluoro-2-hydroxyphenyl)-4(5)-ethylimidazole, 2-(4-fluoro-2-hydroxyphenyl)-4,5-dimethylimidazole, 4-ethyl-2-(4-fluoro-2-hydroxyphenyl)-5-methylimidazole, 2-(4-fluoro-2-hydroxyphenyl)-4-isopropyl-5-methylimidazole, 4-butyl-2-(4-fluoro-2-hydroxyphenyl)-5-methylimidazole, 2-(4-chloro-2-hydroxyphenyl)imidazole, 2-(4-chloro-2-hydroxyphenyl)-4(5)-methylimidazole, and 2-(4-chloro-2-hydroxyphenyl)-4(5)-ethylimidazole.

Further examples thereof include 2-(4-chloro-2-hydroxyphenyl)-4,5-dimethylimidazole, 2-(4-chloro-2-hydroxyphenyl)-4-ethyl-5-methylimidazole, 2-(4-chloro-2-hydroxyphenyl)-4-isopropyl-5-methylimidazole, 4-butyl-2-(4-chloro-2-hydroxyphenyl)-5-methylimidazole, 2-(4-bromo-2-hydroxyphenyl)imidazole, 2-(4-bromo-2-hydroxyphenyl)-4(5)-methylimidazole, 2-(4-bromo-2-hydroxyphenyl)-4(5)-ethylimidazole, 2-(4-bromo-2-hydroxyphenyl)-4,5-dimethylimidazole, 2-(4-bromo-2-hydroxyphenyl)-4-ethyl-5-methylimidazole, 2-(4-bromo-2-hydroxyphenyl)-4-isopropyl-5-methylimidazole, 2-(4-bromo-2-hydroxyphenyl)-4-butyl-5-methylimidazole, and 2-(2,3-dihydroxyphenyl)imidazole.

Further examples thereof include 2-(2,3-dihydroxyphenyl)-4(5)-methylimidazole, 2-(2,3-dihydroxyphenyl)-4(5)-ethylimidazole, 2-(2,3-dihydroxyphenyl)-4,5-dimethylimidazole, 2-(2,3-dihydroxyphenyl)-4(5)-phenylimidazole, 2-(2,3-dihydroxyphenyl)-4,5-diphenylimidazole, 2-(2,5-dihydroxyphenyl)imidazole, 2-(2,5-dihydroxyphenyl)-4(5)-methylimidazole, 2-(2,5-dihydroxyphenyl)-4(5)-ethylimidazole, 2-(2,5-dihydroxyphenyl)-4,5-dimethylimidazole, 2-(2,5-dihydroxyphenyl)-4(5)-phenylimidazole, 2-(2,5-dihydroxyphenyl)-4,5-diphenylimidazole, 2-(2-hydroxy-4-methoxyphenyl)imidazole, 2-(2-hydroxy-4-methoxyphenyl)-4(5)-methylimidazole, 4(5)-ethyl-2-(2-hydroxy-4-methoxyphenyl)imidazole, 4,5-dimethyl-2-(2-hydroxy-4-methoxyphenyl)imidazole, 2-(2-hydroxy-4-methoxyphenyl)-4(5)-phenylimidazole, 4,5-diphenyl-2-(2-hydroxy-4-methoxyphenyl)imidazole, 2-(2-hydroxy-3-methoxyphenyl)imidazole, 2-(2-hydroxy-3-methoxyphenyl)-4(5)-methylimidazole, and 4(5)-ethyl-2-(2-hydroxy-3-methoxyphenyl)imidazole.

Further examples thereof include 4,5-dimethyl-2-(2-hydroxy-3-methoxyphenyl)imidazole, 2-(2-hydroxy-3-methoxyphenyl)-4(5)-phenylimidazole, 4,5-diphenyl-2-(2-hydroxy-3-methoxyphenyl)imidazole, 2-(2-hydroxy-5-methoxyphenyl)imidazole, 2-(2-hydroxy-5-methoxyphenyl)-4(5)-methylimidazole, 4(5)-ethyl-2-(2-hydroxy-5-methoxyphenyl) imidazole, 4,5-dimethyl-2-(2-hydroxy-5-methoxyphenyl)imidazole, 2-(2-hydroxy-5-methoxyphenyl)-4(5)-phenylimidazole, 4,5-diphenyl-2-(2-hydroxy-5-methoxyphenyl)imidazole, 2-(2-hydroxy-6-methoxyphenyl)imidazole, 2-(2-hydroxy-6-methoxyphenyl)-4(5)-methylimidazole, 4(5)-ethyl-2-(2-hydroxy-6-methoxyphenyl)imidazole, 4,5-dimethyl-2-(2-hydroxy-6-methoxyphenyl)imidazole, 2-(2-hydroxy-6-methoxyphenyl)-4(5)-phenylimidazole, 4,5-diphenyl-2-(2-hydroxy-6-methoxyphenyl)imidazole, 2-(3-ethoxy-2-hydroxyphenyl)imidazole, 2-(3-ethoxy-2-hydroxyphenyl)-4(5)-methylimidazole, 2-(3-ethoxy-2-hydroxyphenyl)-4(5)-ethylimidazole, 4,5-dimethyl-2-(3-ethoxy-2-hydroxyphenyl)imidazole, and 2-(3-ethoxy-2-hydroxyphenyl)-4(5)-phenylimidazole.

Further examples thereof include 4,5-diphenyl-2-(3-ethoxy-2-hydroxyphenyl)imidazole, 2-(5-ethoxy-2-hydroxyphenyl)imidazole, 2-(5-ethoxy-2-hydroxyphenyl)-4(5)-methylimidazole, 2-(5-ethoxy-2-hydroxyphenyl)-4(5)-ethylimidazole, 4,5-dimethyl-2-(5-ethoxy-2-hydroxyphenyl)imidazole, 2-(5-ethoxy-2-hydroxyphenyl)-4(5)-phenylimidazole, 4,5-diphenyl-2-(5-ethoxy-2-hydroxyphenyl)imidazole, 2-(4-allyl-2-hydroxy-3-methoxyphenyl)imidazole, 2-(4-allyl-2-hydroxy-3-methoxyphenyl)-4(5)-methylimidazole, 2-(4-allyl-2-hydroxy-3-methoxyphenyl)-4(5)-ethylimidazole, 2-(4-allyl-2-hydroxy-3-methoxyphenyl)-4,5-dimethylimidazole, 2-(4-allyl-2-hydroxy-3-methoxyphenyl)-4(5)-phenylimidazole, 2-(4-allyl-2-hydroxy-3-methoxyphenyl)-4,5-diphenylimidazole, and 2-(4,6-dimethoxy-2-hydroxyphenyl)imidazole.

Further examples thereof include 2-(4,6-dimethoxy-2-hydroxyphenyl)-4(5)-methylimidazole, 2-(4,6-dimethoxy-2-hydroxyphenyl)-4(5)-ethylimidazole, 2-(4,6-dimethoxy-2-hydroxyphenyl)-4,5-dimethylimidazole, 2-(4,6-dimethoxy-2-hydroxyphenyl)-4(5)-phenylimidazole, 2-(4,6-dimethoxy-2-hydroxyphenyl)-4,5-diphenylimidazole, 2-(2-fluoro-5-hydroxyphenyl)imidazole, 2-(2-fluoro-5-hydroxyphenyl)-4(5)-methylimidazole, 2-(2-fluoro-5-hydroxyphenyl)-4(5)-ethylimidazole, 2-(2-fluoro-5-hydroxyphenyl)-4,5-dimethylimidazole, 2-(2-fluoro-5-hydroxyphenyl)-4(5)-phenylimidazole, 2-(2-fluoro-5-hydroxyphenyl)-4,5-diphenylimidazole, 2-(5-fluoro-2-hydroxyphenyl)imidazole, 2-(5-fluoro-2-hydroxyphenyl)-4(5)-methylimidazole, and 2-(5-fluoro-2-hydroxyphenyl)-4(5)-ethylimidazole.

Further examples thereof include 2-(5-fluoro-2-hydroxyphenyl)-4,5-dimethylimidazole, 2-(5-fluoro-2-hydroxyphenyl)-4(5)-phenylimidazole, 2-(5-fluoro-2-hydroxyphenyl)-4,5-diphenylimidazole, 2-(5-chloro-2-hydroxyphenyl)imidazole, 2-(5-chloro-2-hydroxyphenyl)-4(5)-methylimidazole, 2-(5-chloro-2-hydroxyphenyl)-4(5)-ethylimidazole, 2-(5-chloro-2-hydroxyphenyl)-4,5-dimethylimidazole, 2-(5-chloro-2-hydroxyphenyl)-4(5)-phenylimidazole, 2-(5-chloro-2-hydroxyphenyl)-4,5-diphenylimidazole, 2-(5-bromo-2-hydroxyphenyl)imidazole, 2-(5-bromo-2-hydroxyphenyl)-4(5)-methylimidazole, 2-(5-bromo-2-hydroxyphenyl)-4(5)-ethylimidazole, 2-(5-bromo-2-hydroxyphenyl)-4,5-dimethylimidazole, 2-(5-bromo-2-hydroxyphenyl)-4(5)-phenylimidazole, 2-(5-bromo-2-hydroxyphenyl)-4,5-diphenylimidazole, and 2-(6-fluoro-2-hydroxy-3-methoxyphenyl)imidazole.

Further examples thereof include 2-(6-fluoro-2-hydroxy-3-methoxyphenyl)-4(5)-methylimidazole, 2-(6-fluoro-2-hydroxy-3-methoxyphenyl)-4(5)-ethylimidazole, 2-(6-fluoro-2-hydroxy-3-methoxyphenyl)-4,5-dimethylimidazole, 2-(6-fluoro-2-hydroxy-3-methoxyphenyl)-4(5)-phenylimidazole, 2-(6-fluoro-2-hydroxy-3-methoxyphenyl)-4,5-diphenylimidazole, 2-(1-hydroxynaphthalen-2-yl)imidazole, 2-(1-hydroxynaphthalen-2-yl)-4(5)-methylimidazole, 2-(1-hydroxynaphthalen-2-yl)-4(5)-ethylimidazole, 4,5-dimethyl-2-(1-hydroxynaphthalen-2-yl)imidazole, 2-(1-hydroxynaphthalen-2-yl)-4(5)-phenylimidazole, 4,5-diphenyl-2-(1-hydroxynaphthalen-2-yl)imidazole, 2-(2-hydroxynaphthalen-1-yl)imidazole, 2-(2-hydroxynaphthalen-1-yl)-4(5)-methylimidazole, 2-(2-hydroxynaphthalen-1-yl)-4(5)-ethylimidazole, 4,5-dimethyl-2-(2-hydroxynaphthalen-1-yl)imidazole, 2-(2-hydroxynaphthalen-1-yl)-4(5)-phenylimidazole, and 4,5-diphenyl-2-(2-hydroxynaphthalen-1-yl)imidazole.

The compound represented by the formula (1) is preferably 2-(2-hydroxyphenyl)imidazole, 2-(2-hydroxyphenyl)-4(5)-methylimidazole, 4-ethyl-(2-hydroxyphenyl)-5-methylimidazole, (2-hydroxyphenyl)-4-isopropyl-5-methylimidazole, 4-butyl-(2-hydroxyphenyl)-5-methylimidazole, or 2-(2-hydroxy-3(5)-methoxyphenyl)imidazole.

Examples of the compound represented by the formula (2) include, but are not limited to, the following imidazole compounds:

2-(2-hydroxyphenyl)benzimidazole, 2-(2-hydroxy-3-methylphenyl)benzimidazole, 2-(2-hydroxy-4-methylphenyl)benzimidazole, 2-(2-hydroxy-5-methylphenyl)benzimidazole, 2-(3-t-butyl-2-hydroxyphenyl)benzimidazole, 2-(4-fluoro-2-hydroxyphenyl)benzimidazole, 2-(4-chloro-2-hydroxyphenyl)benzimidazole, 2-(4-bromo-2-hydroxyphenyl)benzimidazole, 2-(2,3-dihydroxyphenyl)benzimidazole, 2-(2,5-dihydroxyphenyl)benzimidazole, 2-(2-hydroxy-4-methoxyphenyl)benzimidazole, 2-(2-hydroxy-3-methoxyphenyl)benzimidazole, 2-(2-hydroxy-5-methoxyphenyl)benzimidazole, 2-(2-hydroxy-6-methoxyphenyl)benzimidazole, 2-(3-ethoxy-2-hydroxyphenyl)benzimidazole, 2-(5-ethoxy-2-hydroxyphenyl)benzimidazole, 2-(4-allyl-2-hydroxy-3-methoxyphenyl)benzimidazole, 2-(4,6-dimethoxy-2-hydroxyphenyl)benzimidazole, 2-(5-fluoro-2-hydroxyphenyl)benzimidazole, 2-(5-chloro-2-hydroxyphenyl)benzimidazole, 2-(5-bromo-2-hydroxyphenyl)benzimidazole, 2-(6-fluoro-2-hydroxy-3-methoxyphenyl)benzimidazole, 2-(1-hydroxynaphthalen-2-yl)benzimidazole, 2-(2-hydroxynaphthalen-1-yl)benzimidazole, and 2-(2-hydroxyphenyl)benzimidazole-6-carboxylic acid.

Among them, the compound represented by the formula (1) is preferably a compound in which both $R_1$ and $R_2$ are hydrogen atoms or have different substituents, more preferably, for example, 2-(2-hydroxyphenyl)imidazole, 2-(2-hydroxyphenyl)-4(5)-methylimidazole, 4-ethyl-(2-hydroxyphenyl)-5-methylimidazole, (2-hydroxyphenyl)-4-isopropyl-5-methylimidazole, 4-butyl-(2-hydroxyphenyl)-5-methylimidazole, or 2-(2-hydroxy-3(5)-methoxyphenyl)imidazole, further preferably 2-(2-hydroxyphenyl)imidazole, from the viewpoint of obtaining a homogenous compound owing to excellent solubility in the epoxy resin (A) or a solvent, and also achieving high heat resistance.

The compound represented by the formula (2) is preferably 2-(2-hydroxyphenyl)benzimidazole, 2-(2-hydroxy-3(5)-methoxyphenyl)benzimidazole, 2-(1-hydroxynaphthalen-2-yl)benzimidazole, 2-(2-hydroxynaphthalen-1-yl)benzimidazole, or 2-(2-hydroxyphenyl)benzimidazole-6-carboxylic acid, more preferably 2-(2-hydroxyphenyl)benzimidazole or 2-(2-hydroxy-3(5)-methoxyphenyl)benzimidazole, from the viewpoint of obtaining similar effects.

The content of the curing agent (D) having an imidazole structure in the compound of the present embodiment is preferably 0.1 parts by mass or more, more preferably 0.3 parts by mass or more, further preferably 0.5 parts by mass or more, with respect to 100 parts by mass of the epoxy resin (A). The content of the curing agent satisfies the range described above, whereby mechanical strength at the time of curing at a low temperature is easily controlled.

The content of the curing agent (D) having an imidazole structure is preferably 15.0 parts by mass or less, more preferably 12.0 parts by mass or less, further preferably 10.0 parts by mass or less, with respect to 100 parts by mass of the epoxy resin (A). The content of the curing agent satisfies the range described above, whereby the storage stability of the compound is easily controlled.

The content of the curing agent (D) having an imidazole structure (content (Z) of the curing agent mentioned later) is preferably less than 5.0% by mass, more preferably less than 3.0% by mass, further preferably less than 1.0% by mass, with respect to the total mass of the compound of the present embodiment from the viewpoint of mechanical strength. The content is preferably more than 0.01% by mass, more preferably more than 0.03% by mass, further preferably more than 0.05% by mass, with respect to the total mass of the compound of the present embodiment from the viewpoint of the heat resistance of a bonded magnet.

<Ratio between specific surface area value of magnetic particle and content of curing agent (D) having an imidazole structure>

In the bonded magnet compound of the present embodiment,

when a content (% by mass) of the magnetic particle (C) with respect to the total mass of the bonded magnet compound is defined as (X),

a specific surface area value ($m^2/g$) of the magnetic particle (C) is defined as (Y), and

a content (% by mass) of the curing agent (D) having an imidazole structure with respect to the total mass of the bonded magnet compound is defined as (Z),

(X), (Y), and (Z) preferably satisfy the following expression ($\gamma$):

$$0.000010 \leq (Z)/(X) \times (Y) \leq 0.30 \ldots (\gamma).$$

The configuration described above is satisfied, whereby binding strength around the interface between the magnetic particle and the resin composition is improved, and the mechanical strength of a bonded magnet can be further enhanced. Besides, change in characteristics caused by heating at the time of bonded magnet formation can be further suppressed.

As mentioned above, the curing agent (D) having an imidazole structure of the present embodiment interacts with magnetic particle surface in the process of heating so that the concentration of the curing agent (D) having an imidazole structure can be selectively elevated near the magnetic particle surface. Hence, the content of the curing agent (D) with respect to the total mass of the compound is preferably adjusted depending on the surface area of the magnetic particle. As a result, the interaction of the curing agent (D) having an imidazole structure with the magnetic particle surface can be effectively exerted.

The value of (X) × (Y) in the expression (y) is an index that indicates the specific surface area of the magnetic particle that occupies the compound. A larger value refers to a larger surface area of the magnetic particle in the compound.

The value of (Z)/(X) × (Y) in the expression (y) is an index that indicates the ratio between the specific surface area of the magnetic particle and the content of the curing agent (D) having an imidazole structure. The value of (Z)/(X) × (Y) is controlled to a specific range, whereby a cross-link density, particularly, near metal element-containing particle (magnetic particle) surface can be elevated while the curing strength of the whole bonded magnet is maintained. This consequently leads to improvement in mechanical strength and moist heat resistance of a bonded magnet.

In the present embodiment, the value of (Z)/(X) × (Y) in the expression (y) is more preferably $0.000050 \leq (Z)/(X) \times (Y) \leq 0.10$, further preferably $0.00010 \leq (Z)/(X) \times (Y) \leq 0.050$, further preferably $0.00020 \leq (Z)/(X) \times (Y) \leq 0.030$, further preferably $0.00030 \leq (Z)/(X) \times (Y) \leq 0.050$, from the viewpoint of mechanical strength and moist heat resistance.

As for a method for controlling the value of (Z)/(X) × (Y), this value can be adjusted by arbitrarily changing each of the values of (X), (Y), and (Z).

<Compound (E) represented by formula (3)>

The compound of the present embodiment preferably includes a compound (E) represented by the formula (3).

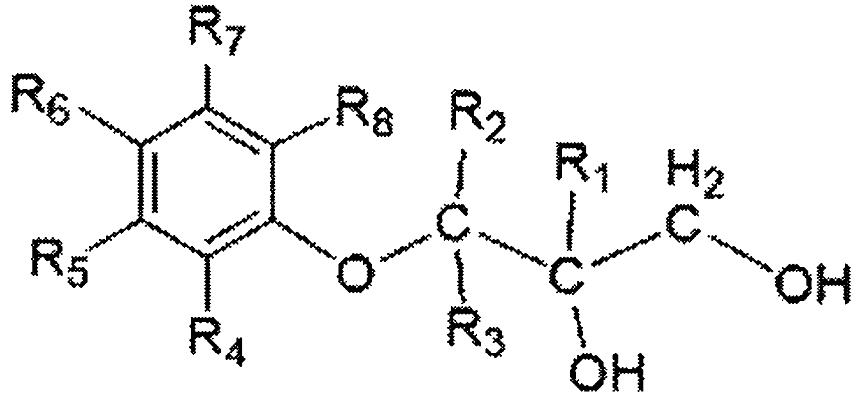

· · · · (3)

In the formula (1), each of $R_1$ to $R_8$ is one member selected from the group consisting of hydrogen, an alkyl group (preferably an alkyl group having 1 to 50 carbon atoms), an aromatic group, a substituent containing a heteroatom, and a substituent containing a halogen atom. $R_1$ to $R_8$ are the same as or different from each other. At least two moieties selected from $R_4$ to $R_8$ optionally form a ring to form a condensed ring with the adjacent benzene ring.

The compound satisfies the configuration described above, whereby the close contact between the metal element-containing particle and the resin composition is improved, and the mechanical strength of a bonded magnet can be further enhanced. The moist heat resistance of a bonded magnet can also be enhanced.

Examples of the compound represented by the formula (3) include, but are not particularly limited to, 3-phenoxy-1,2-propanediol, 3-phenoxy-1,3-propanediol, mephenesin (3-(2-methylphenoxy)-1,2-propanediol), guaifenesin (3-(2-methoxyphenoxy)propane-1,2-diol), compounds having a 1,2-propanediol structure formed by the ring opening of a terminal epoxy group of biphenyl-type epoxy resin, compounds having a 1,2-propanediol structure formed by the ring opening of a terminal epoxy group of stilbene-type epoxy resin, compounds having a 1,2-propanediol structure formed by the ring opening of a terminal epoxy group of diphenylmethane-type epoxy resin, compounds having a 1,2-propanediol structure formed by the ring opening of a terminal epoxy group of sulfur atom-containing epoxy resin, compounds having a 1,2-propanediol structure formed by the ring opening of a terminal epoxy group of phenol novolac-type epoxy resin, compounds having a 1,2-propanediol structure formed by the ring opening of a terminal epoxy group of novolac-type epoxy resin such as cresol novolac-type epoxy resin and naphthol novolac-type epoxy resin, compounds having a 1,2-propanediol structure formed by the ring opening of a terminal epoxy group of dicyclopentadiene-type epoxy resin, compounds having a 1,2-propanediol structure formed by the ring opening of a terminal epoxy group of salicylaldehyde-type epoxy resin such as salicylaldehyde novolac-type epoxy resin, compounds having a 1,2-propanediol structure formed by the ring opening of a terminal epoxy group of copolymer-type epoxy resin of naphthols and phenols, compounds having a 1,2-propanediol structure formed by the ring opening of a terminal epoxy group of an epoxidation product of aralkyl-type phenol resin, compounds having a 1,2-propanediol structure formed by the ring opening of a terminal epoxy group of an epoxidation product of bisphenol-type epoxy resin, compounds having a 1,2-propanediol structure formed by the ring opening of a terminal epoxy group of glycidyl ether-type epoxy resin of alcohols, compounds having a 1,2-propanediol structure formed by the ring opening of a terminal epoxy group of glycidyl ether-type epoxy resin of paraxylylene- and/or metaxylylene-modified phenol resin, compounds having a 1,2-propanediol structure formed by the ring opening of a terminal epoxy group of glycidyl ether-type epoxy resin of terpene-modified phenol resin, compounds having a 1,2-propanediol structure formed by the ring opening of a terminal epoxy group of cyclopentadiene-type epoxy resin, compounds having a 1,2-propanediol structure formed by the ring opening of a terminal epoxy group of glycidyl ether-type epoxy resin of polycyclic aromatic ring-modified phenol resin, compounds having a 1,2-propanediol structure formed by the ring opening of a terminal epoxy group of glycidyl ether-type epoxy resin of naphthalene ring-containing phenol resin, compounds having a 1,2-propanediol structure formed by the ring opening of a terminal epoxy group of glycidyl ester-type epoxy resin, compounds having a 1,2-propanediol structure formed by the ring opening of a terminal epoxy group of glycidyl-type or methyl glycidyl-type epoxy resin, compounds having a 1,2-propanediol structure formed by the ring opening of a terminal epoxy group of alicyclic epoxy resin, compounds having a 1,2-propanediol structure formed by the ring opening of a terminal epoxy group of halogenated phenol novolac-type epoxy resin, compounds having a 1,2-propanediol structure formed by the ring opening of a terminal epoxy group of hydroquinone-type epoxy resin, and compounds having a 1,2-propanediol structure formed by the ring opening of a terminal epoxy group of linear aliphatic epoxy resin obtained by the oxidation of trimethylolpropane-type epoxy resin and an olefin bond with a peracid such as peracetic acid.

Among them, the compound represented by the formula (3) preferably includes at least one member selected from the group consisting of a compound having a 1,2-propanediol structure formed by the ring opening of a terminal epoxy group of biphenyl-type epoxy resin, a compound having a 1,2-propanediol structure formed by the ring opening of a terminal epoxy group of orthocresol novolac-type epoxy resin, a compound having a 1,2-propanediol structure formed by the ring opening of a terminal epoxy group of phenol novolac-type epoxy resin, a compound having a 1,2-propanediol structure formed by the ring opening of a terminal epoxy group of salicylaldehyde novolac-type epoxy resin, and a compound having a 1,2-propanediol structure formed by the ring opening of a terminal epoxy group of naphthol novolac-type epoxy resin, from the viewpoint of obtaining a homogeneous resin composition owing to favorable compatibility with the epoxy resin (A). One of these compounds may be used singly, or two or more thereof may be used in combination.

The content of the compound represented by the formula (3) is preferably 0.00001% by mass or more, more preferably 0.0001% by mass or more, further preferably 0.001% by mass or more, with respect to the total mass of the epoxy resin (A). The content of the compound of the formula (3) is preferably less than 20% by mass, more preferably less than 15% by mass, further preferably less than 10% by mass, particularly preferably less than 8% by mass, still further preferably less than 7% by mass, even further preferably less than 6% by mass, particularly further preferably less than 5% by mass, exceedingly preferably less than 3% by mass, further exceedingly preferably less than 2% by mass, with respect to the total mass of the epoxy resin (A). The compound of the present embodiment includes 0.00001% by mass or more of the compound represented by the formula (3) and can thereby further enhance the mechanical strength and moist heat resistance of a bonded magnet.

<Ketone compound (F)>

The compound of the present embodiment preferably includes a ketone compound (F). The compound satisfies the configuration described above, whereby close contact between the metal element-containing particle and the resin composition is improved, and the mechanical strength and moist heat resistance of a bonded magnet can be further enhanced.

The content of the ketone compound (F) is preferably less than 5.0% by mass, more preferably less than 1.0% by mass, further preferably less than 0.5% by mass, with respect to the total mass of the compound from the viewpoint of the Tg of a bonded magnet. The content is preferably more than 0.0001% by mass, more preferably more than 0.0005% by mass, further preferably more than 0.001% by mass, with respect to the total mass of the compound from the viewpoint of the moist heat resistance of a bonded magnet.

Examples of the ketone compound include acetone, methyl ethyl ketone, diethyl ketone, methyl propyl ketone, methyl isobutyl ketone, cyclohexanone, acetophenone, and propylene glycol monomethyl ether acetate.

<Lubricant>

The compound of the present embodiment may include a lubricant. The lubricant contained in the compound improves the fluidity and moldability of the compound and improves the mold release properties of the compound. As a result, the accuracy of the shape and dimension of a bonded magnet is improved, and structural defects of a bonded magnet are easily suppressed.

The lubricant can be at least one member selected from the group consisting of a saturated fatty acid, a saturated fatty acid salt, and saturated fatty acid ester. A wax can be at least one member selected from the group consisting of lauric acid, myristic acid, pentadecylic acid, palmitic acid, margaric acid, stearic acid, arachidic acid, henicosylic acid, behenic acid, lignoceric acid, cerotic acid, montanic acid, melissic acid, calcium laurate, calcium myristate, calcium pentadecylate, calcium palmitate, calcium margarate, calcium stearate, calcium arachidate, calcium henicosylate, calcium behenate, calcium lignocerate, calcium cerotate, calcium montanate, calcium melissate, barium laurate, barium myristate, barium pentadecylate, barium palmitate, barium margarate, barium stearate, barium arachidate, barium henicosylate, barium behenate, barium lignocerate, barium cerotate, barium montanate, barium melissate, lauric acid ester, myristic acid ester, pentadecylic acid ester, palmitic acid ester, margaric acid ester, stearic acid ester, arachidic acid ester, henicosylic acid ester, behenic acid ester, lignoceric acid ester, cerotic acid ester, montanic acid ester, and melissic acid ester. The compound may include a wax other than those described above. The wax can be at least one member selected from the group consisting of, for example, a magnesium salt of the saturated fatty acid, an aluminum salt of the saturated fatty acid, 12-oxystearic acid, calcium ricinoleate, stearamide, oleamide, erucamide, behenamide, palmitamide, lauramide, hydroxystearamide, methylene bisstearamide, ethylene bisstearamide, ethylene bislauramide, distearyl adipamide, ethylene bisoleamide, dioleyl adipamide, N-stearyl stearamide, N-oleyl stearamide, N-stearyl erucamide, methylol stearamide,

methylol behenamide, ethylene glycol, stearyl alcohol, polyethylene glycol, polypropylene glycol, polytetramethylene glycol, silicone oil, silicon grease, fluorine-based oil, fluorine-based grease, a fluorine-containing resin powder, paraffin wax, polyethylene wax, amide wax, polypropylene wax, ester wax, carnauba wax, and microwax. The compound can include one of the lubricants described above. The compound may include two or more of the lubricants described above.

The inner wall surface (wall surface that comes into contact with a punch) of a mold die may be coated with a dispersion of an internal lubricant, instead of or in addition to the lubricant blended into the compound.

<Coupling agent>

The compound of the present embodiment may include a coupling agent. The coupling agent contained therein can further enhance close contact between the resin composition and metal element-containing particle surface and can further enhance the strength of a bonded magnet.

Examples of the coupling agent include coupling agents of silane-based compounds such as epoxysilane, mercaptosilane, aminosilane, alkylsilane, ureidosilane, and vinylsilane, coupling agents of titanium-based compounds, coupling agents of aluminum chelates, and coupling agents of aluminum/zirconium-based compounds.

<Flow aid>

The compound of the present embodiment may include an inorganic filler as a flow aid. The inorganic filler may be constituted by one type of particle. The inorganic filler may be a combination of two or more types of particles.

The average particle size (D50) of the inorganic filler is preferably 1 μm or smaller, more preferably 500 nm or smaller, further preferably 100 nm or smaller. This can enhance the filling factor of a bonded magnet.

Examples of the inorganic filler include inorganic fine particles such as silica, alumina, calcium carbonate, kaolin clay, titanium oxide, barium sulfate, zinc oxide, aluminum hydroxide, magnesium hydroxide, talc, and mica.

<Flame retardant>

The compound of the present embodiment may include a flame retardant. The flame retardant contained therein can improve the fire resistance of the compound. The flame retardant is preferably at least one member selected from the group consisting of a bromine-based flame retardant, a phosphorus-based flame retardant, a hydrated metal compound-based flame retardant, a silicone-based flame retardant, a nitrogen-containing compound, a hindered amine compound, an organometallic compound, and an aromatic engineering plastic from the viewpoint of environmental safety, recyclability, molding processability, and low cost.

<Organic solvent (G)>

In a production process of the compound, a varnish of the resin composition dissolved in an organic solvent (G) is prepared, and individual metal element-containing particles constituting the metal element-containing particle can be surface-coated therewith to obtain a homogenous compound. The organic solvent (G) is not limited as long as the solvent can dissolve the resin composition. The organic solvent (G) can be at least one solvent selected from the group consisting of, for example, acetone, methyl ethyl ketone, methyl isobutyl ketone, benzene, toluene, and xylene. The organic solvent (G) is preferably a liquid at ordinary temperature in consideration of workability, and the boiling point of the organic solvent (G) is preferably 60°C or higher and 150°C or lower. Such a solvent is preferably, for example, acetone or methyl ethyl ketone.

<Varnish>

The varnish of the present embodiment is a varnish including an epoxy resin (A), a curing agent (D) having an imidazole structure, a curing agent (B) different from the curing agent having an imidazole structure, and an organic solvent (G). The varnish of the present embodiment may be for bonded magnets and can be used in a process of producing a compound mentioned later.

<Method for producing compound>

Examples of the method for producing the compound of the present embodiment include, but are not particularly limited to, a method of mixing a resin composition at a temperature equal to or higher than a melting point (hereinafter, simply referred to as "melt mixing"), and a method of dissolving a resin composition in a solvent and mixing the solution (hereinafter, simply referred to as "dissolution and mixing").

The melt mixing can be carried out by the following method.

Compound starting materials (epoxy resin, metal element-containing particle, curing agent (D) having an imidazole structure, curing agent (B) different from the curing agent having an imidazole structure, and other additives) are thoroughly mixed with a mixer to obtain a mixed powder of the compound starting materials. The obtained mixed powder of the compound starting materials is heated and mixed at a temperature equal to or higher than the softening temperature of the resin composition, and solid matter is appropriately ground to obtain a compound.

The temperature of heating and mixing is preferably 40°C or higher and 140°C or lower, more preferably 60°C or higher and 120°C or lower, it depends on the type of the resin composition or the amount of the resin composition blended. Heating and mixing within the temperature range described above can enhance material dispersibility in the compound while suppressing the curing reaction of the resin composition.

A mixing apparatus is not particularly limited, and a heating kneader, for example, can be used. In this respect, material dispersibility can be controlled by changing the amounts of the compound starting materials added.

The dissolution and mixing can be carried out by the following method.

Starting materials, such as an epoxy resin, a curing agent (D) having an imidazole structure, and a curing agent (B) different from the curing agent having an imidazole structure, for a resin composition are dissolved in an organic solvent (G) to obtain a solution of a resin composition. Metal element-containing particles are added to the solution of the resin composition so that the magnetic particles are dispersed in the solution of the resin composition. Then, the organic solvent (G) is removed from the solution containing the metal element-containing particles and the resin composition by distillation under reduced pressure and drying. As a result, the surface of the metal element-containing particles is coated with the resin composition to obtain a compound composed of the metal element-containing particles and the resin composition.

In the step of removing the organic solvent (G) from the solution containing the metal element-containing particles and the resin composition, the organic solvent (G) is preferably distilled off under reduced pressure at ordinary temperature using an evaporator while the solution is stirred. Solid matter obtained by distillation under reduced pressure is further dried in a vacuum dryer or the like. Then, the solid matter is appropriately ground to obtain a compound. The organic solvent can be distilled off at ordinary temperature, instead of being distilled off under reduced pressure, while the solution is stirred with a kneader or the like. In a method for drying the solid matter obtained by distillation, the solid matter may be dried by the heating of the solid matter at, for example, 80°C or lower, preferably 60°C or lower, more preferably 40°C or lower.

<Method for producing bonded magnet>

The compound filled into a mold is compression-molded to obtain a molded product. A higher molding pressure improves the density of the bonded magnet, whereas easily cracking magnetic particles. The molding pressure can be arbitrarily set depending on the characteristics of the compound or the characteristics of the bonded magnet.

A resin composition in a molded product is cured by the heat treatment of the molded product so that magnetic particles in the molded product are bonded to each other through a cured product of the resin composition to obtain a bonded magnet. The heat treatment temperature of the molded product is preferably set to a temperature at which the resin composition is sufficiently cured. Low-temperature curing and short-time curing are preferred from the viewpoint of suppressing the oxidation of magnetic particle surface. The curing temperature is, for example, preferably 200°C or lower, more preferably 180°C or lower, further preferably 150°C or lower. The curing time is, for example, preferably 120 minutes or shorter, more preferably 60 minutes or shorter, further preferably 30 minutes or shorter.

In the case of orienting magnetic particles, a magnetic field may be applied before compression molding, during compression molding, and during heat treatment of the molded product. When a magnetic field is applied during heat treatment of the molded product, the rate of orientation of the magnetic particles can be enhanced, for example, by warming the molded product to 100°C to soften the resin composition and applying the magnetic field. After orientation by the magnetic field, the compression pressure can be elevated until the molded product reaches a predetermined density.

## Examples

Hereinafter, the present embodiment will be described in more detail with reference to specific Examples and Comparative Examples. However, the present invention is not limited by Examples and Comparative Examples given below by any means.

In the following description, the terms "parts" and "%" are based on mass unless otherwise specified.

[Bonded magnet compound]

(Epoxy resins (A-1) to (A-5))

Epoxy resins (A-1) to (A-5) used in Examples and Comparative Examples are shown in Table 1.

[Table 1]

| Epoxy resin No. | Resin type | Presence or absence of structure represented by formula (A1) | Presence or absence of structure represented by formula (A2) | Nature (room temperature) | Epoxy equivalent (g/eq.) |
|---|---|---|---|---|---|
| A-1 | NC-3000-L (manufactured by Nippon Kayaku Co., Ltd.) Biphenyl novolac type | Absent | Absent | Solid | 270 |
| A-2 | HP-4700 (manufactured by DIC Corp.) Naphthalene type | Absent | Absent | Solid | 167 |
| A-3 | jER1001 (manufactured by Mitsubishi Chemical Corp.) Bisphenol A type | Absent | Absent | Solid | 472 |
| A-4 | AER4001 (manufactured by Asahi Kasei Corp.) | Present | Absent | Solid | 193 |
| A-5 | AER9000 (manufactured by Asahi Kasei Corp.) | Absent | Present | Liquid | 370 |

(Curing agents (B-1) and (B-2))

Curing agents (B-1) and (B-2) used in Examples and Comparative Examples are shown in Table 2.

[Table 2]

| Curing agent No. | Resin type | Nature (room temperature) | Hydroxy group equivalent (g/eq.) |
|---|---|---|---|
| B-1 | GPH-65 (manufactured by Nippon Kayaku Co., Ltd.) Biphenyl novolac | Solid | 199 |
| B-2 | TD-2131 (manufactured by DIC Corp.) Phenol novolac | Solid | 104 |

(Metal element-containing particles (C-1) and (C-2))

Metal element-containing particles (C-1) and (C-2) used in Examples and Comparative Examples are shown in Table 3.

[Table 3]

| Magnetic particle No. | Product name | Type | Particle size (D50) of coarse particle | Particle size (D50) of fine particle | Specific surface area ($m^2/g$) | True density ($g/cm^3$) |
|---|---|---|---|---|---|---|
| C-1 | Wellmax-S1 (manufactured by Sumitomo Metal Mining Co., Ltd.) | Sm-F-N-based | 2.2 μm | - | 0.7 | 7.6 |

(continued)

| Magnetic particle No. | Product name | Type | Particle size (D50) of coarse particle | Particle size (D50) of fine particle | Specific surface area ($m^2/g$) | True density ($g/cm^3$) |
|---|---|---|---|---|---|---|
| C-2 | MQP-B4 (manufactured by Magnequench International, LLC) | Nd-FeN-based | - | 100 μm | 0.06 | 7.6 |

(Filler particles (R-1) and (R-2))

Filler particles (R-1) and (R-2) used in Comparative Examples are shown in Table 4.

[Table 4]

| Filler particle No. | Product name | Type | Particle size (D50) | True density ($g/cm^3$) |
|---|---|---|---|---|
| R-1 | KE-S150 (manufactured by Nippon Shokubai Co., Ltd.) | Silica | 1.5 μm | 2.2 |
| R-2 | KMP-706 (manufactured by Shin-Etsu Silicone Co., Ltd.) | Silicone resin | 2.0 μm | 1.3 |

(Curing agents (D-1) to (D-4))

Curing agents (D-1) to (D-4) used in Examples and Comparative Examples are shown in Table 5.

[Table 5]

| Curing agent (D) No. | Product name |
|---|---|
| D-1 | 2-(2-Hydroxyphenyl)benzimidazole (manufactured by Tokyo Chemical Industry Co., Ltd.) |
| D-2 | 2-(2-Hydroxyphenyl-5-methoxyphenyl)benzimidazole (manufactured by AOBChem USA) |
| D-3 | 2-(2-Hydroxyphenyl)benzimidazole-6-carboxylic acid (manufactured by Apollo Scientific Ltd.) |
| D-4 | 2-(2-Hydroxyphenyl)imidazole (manufactured by Ambeed, Inc.) |

(Curing agents (D'-1) to (D'-12))

Curing agents (D'-1) to (D'-12) used in Comparative Examples are shown in Table 6.

[Table 6]

| Curing agent No. | Product name |
|---|---|
| D'-1 | 2-Methylimidazole (manufactured by Tokyo Chemical Industry Co., Ltd.) |
| D'-2 | 1,2-Dimethylimidazole (manufactured by Tokyo Chemical Industry Co., Ltd.) |
| D'-3 | 2-Undecylimidazole (manufactured by Tokyo Chemical Industry Co., Ltd.) |
| D'-4 | 1B2PZ (1-benzyl-2-phenylimidazole) (manufactured by Shikoku Chemicals Corp.) |
| D'-5 | 2-Phenylimidazole (manufactured by Tokyo Chemical Industry Co., Ltd.) |
| D'-6 | Benzimidazole (manufactured by Tokyo Chemical Industry Co., Ltd.) |
| D'-7 | 2-Phenylbenzimidazole (manufactured by Tokyo Chemical Industry Co., Ltd.) |
| D'-8 | 2- (4-Hydroxyphenyl) benzimidazole (manufactured by Fluorochem Ltd.) |
| D'-9 | 4,5-Bis (hydroxymethyl)-2-phenylimidazole (manufactured by Tokyo Chemical Industry Co., Ltd.) |

(continued)

| Curing agent No. | Product name |
|---|---|
| D'-10 | C17Z (2-Heptadecylimidazole) (manufactured by Shikoku Chemicals Corp.) |
| D'-11 | Triphenyl borane-Triphenylphosphine Complex (manufactured by Tokyo Chemical Industry Co., Ltd.) |
| D'-12 | PX-4PB (manufactured by Nippon Chemical Industrial Co., Ltd.) |

(Compounds (E-1) and (E-2) represented by formula (3))

Compounds (E-1) and (E-2) represented by formula (3) used in Examples and Comparative Examples are shown in Table 7.

[Table 7]

| No. of compound represented by formula (3) | Product name |
|---|---|
| E-1 | 3-Phenoxy-1,2-propanediol (manufactured by Tokyo Chemical Industry Co., Ltd.) |
| E-2 | Bisphenol A (2,3-dihydroxypropyl) glycidyl ether (manufactured by Merck KGaA) |

[Preparation of bonded magnet compound]

(Example 1)

2.0 g of the epoxy resin (A-1), 1.49 g of the curing agent (B-1), 0.06 g of the curing agent (D-1), and 20.0 g of methyl ethyl ketone were mixed in a 300 mL recovery flask and further stirred for 30 minutes to prepare a solution of a resin composition (resin solution).

13.6 g of the metal element-containing particles (C-1) and 54.4 g of the metal element-containing particles (C-2) were added to the recovery flask containing the resin solution and stirred at 25°C for 30 minutes. Subsequently, methyl ethyl ketone in the flask was distilled off by reducing the internal pressure of an evaporator to 0.1 MPa or lower. In the process of distilling off methyl ethyl ketone, an operation of reducing the internal pressure of the flask, an operation of bringing the internal pressure of the flask back to ordinary pressure, and an operation of loosening aggregated contents in the flask were repeated several times in this order for uniformly removing methyl ethyl ketone. After methyl ethyl ketone was distilled off, a mixture of the resin composition and the magnetic particles was recovered from the flask and spread over a plate. An operation of drying the mixture on the plate in vacuum at ordinary temperature in a vacuum dryer, an operation of bringing the internal pressure of the vacuum dryer back to ordinary pressure, and an operation of loosening aggregates were repeated several times in this order. The drying was terminated when the content of methyl ethyl ketone in the mixture became 0.05% by mass, to obtain a compound (CPD-1).

The resin solution and the obtained compound were used in evaluation given below.

(Examples 2 to 7, Examples 9 to 14, Examples 16 to 18, and Comparative Examples 1 to 14)

Bonded magnet compounds (CPD-2) to (CPD-7), (CPD-9) to (CPD-14), (CPD-16) to (CPD-17), and (CPD-18) to (CPD-32) were obtained in the same manner as in Example 1 except that the formulation was changed to each formulation described in Table 8.

Evaluation was conducted in the same manner as in Example 1.

(Example 8)

A compound (CPD-8) was obtained in the same manner as in Example 1 except that the formulation was changed to the formulation described in Table 8; and the drying was terminated when the content of methyl ethyl ketone in the mixture became 0.2% by mass.

Evaluation was conducted in the same manner as in Example 1.

(Example 15)

2.0 g of the epoxy resin (A-1), 1.49 g of the curing agent (B-1), 0.06 g of the curing agent (D-1), 13.6 g of the metal element-containing particles (C-1), and 54.4 g of the magnetic particles (C-2) were mixed using a mixer to prepare a mixture of the starting materials.
The mixture of the starting materials was melt-mixed at 110°C for 1 minute using a low-speed rotation (10 rpm) kneader, and the obtained melted mixture was disintegrated to obtain a compound (CPD-8).
Evaluation was conducted in the same manner as in Example 1.

[Evaluation]

(Specific surface area of metal element-containing particle)

The specific surface area was measured with a mixed gas of $N_2$/He = 30/70 (volume ratio) as an adsorption gas using a fully automated BET specific surface area measurement apparatus HM model-1201 manufactured by Mountech Co., Ltd.
In the case of involving two or more types of metal element-containing particles, the specific surface area was calculated as an average value of the whole metal element-containing particles on the basis of the specific surface area and content ratio of each metal element-containing particle.

(Varnish storage stability)

The solution viscosity immediately after preparation of the resin solution containing the epoxy resin, the curing agent (D) having an imidazole structure, and the curing agent (B) different from the curing agent having an imidazole structure (initial viscosity) and the viscosity after storage of the resin solution at 25°C for 2 weeks were measured at room temperature (25°C) using an E-type viscometer (TVE-35H, manufactured by Toki Sangyo Co., Ltd.), and a varnish thickening ratio was calculated according to the following mathematical expression (1). The resin solution thus stored was indicated by "solidified" if partially or wholly solidified to make viscosity measurement impossible.

Varnish thickening ratio (times) = Viscosity after storage at 25°C for 2 weeks / Initial viscosity        Mathematical expression (1)

A and B ranks were accepted.

<Evaluation criteria>

A: The varnish thickening ratio was 1.0 or more times and less than 1.1 times.

B: The varnish thickening ratio was 1.1 or more times and less than 1.3 times.

C: The varnish thickening ratio was 1.3 or more times and less than 1.5 times.

D: The varnish thickening ratio was 1.5 or more times.

(Mechanical strength of bonded magnet)

The bonded magnet compound was filled into a mold for molding and compression-molded at a molding pressure of 150 MPa for 1 minute using a hydraulic molding machine to obtain a 4 mm × 4 mm × 4 mm compression-molded product. The obtained compression-molded product was heated for 30 minutes in a thermostat bath of 150°C to prepare a bonded magnet molded product.
The obtained bonded magnet molded product was placed in Autograph AGS-H 5kN (manufactured by Shimadzu Corp.), and a compression pressure was applied thereto at a crosshead speed of 1.0 mm/min. The maximum value of the compression pressure at which the bonded magnet molded product was broken was regarded as mechanical strength (MPa). The mechanical strength measurement was performed at 25°C.
A and B ranks were accepted.

<Evaluation criteria>

A: The mechanical strength was 120 MPa or more.

B: The mechanical strength was 100 MPa or more and less than 120 MPa.

C: The mechanical strength was 80 MPa or more and less than 100 MPa.

D: The mechanical strength was less than 80 MPa.

(Change in characteristics caused by heating at time of bonded magnet formation)

The bonded magnet compound was heated for 30 minutes in a thermostat bath of 100°C (one example of conditions at the time of orientation of magnetic particles). Mechanical strength was measured using the bonded magnet compound thus heated. On the basis of the mechanical strength before and after heating, a mechanical strength maintenance rate was calculated according to the following mathematical expression (2) and used as an index for change in characteristics caused by heating at the time of bonded magnet formation.

Mechanical strength maintenance rate = Mechanical strength obtained using the compound heated at 100°C for 30 minutes / Mechanical strength $\times$ 100 Mathematical expression (2)

A and B ranks were accepted.

<Evaluation criteria>

A: The mechanical strength maintenance rate was 70.0% or more.

B: The mechanical strength maintenance rate was 60.0% or more and less than 70.0%.

C: The mechanical strength maintenance rate was 50.0% or more and less than 60.0%.

D: The mechanical strength maintenance rate was less than 50.0%.

(Moist heat resistance of bonded magnet)

The bonded magnet molded product was left for 7 days in a high-temperature and high-humidity environment (temperature: 85°C, humidity: 85%). Mechanical strength was measured using the bonded magnet molded product thus left. The method for preparing the bonded magnet molded product was the same as the preparation method described in the method for evaluating mechanical strength. On the basis of the mechanical strength before and after the bonded magnet molded product was left, a mechanical strength maintenance rate was calculated according to the following mathematical expression (3) and used as an index for moist heat resistance.

Mechanical strength maintenance rate = Mechanical strength of the bonded magnet molded product left for 7 days in a high-temperature and high-humidity environment / Mechanical strength $\times$ 100 Mathematical expression (3)

A and B ranks were accepted.

<Evaluation criteria>

A: The mechanical strength maintenance rate was 85.0% or more.

B: The mechanical strength maintenance rate was 75.0% or more and less than 85.0%.

C: The mechanical strength maintenance rate was 65.0% or more and less than 75.0%.

D: The mechanical strength maintenance rate was less than 65.0%.

Table 8 below shows the composition of the compounds (CPD-1 to CPD-17 and CPD-32) of [Examples 1 to 18] and the compounds (CPD-18 to CPD-31) of [Comparative Example 1 to 14]. Table 9 below shows their evaluation results.

[Table 8]

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y ) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by **mass** | - |
| CPD-1 | A-1 | 2.00 | - | | B-1 | 1.49 | C-1 | 13.6 | C-2 | 54.4 | - | | D-1 | 0.06 | - | | Methyl Ethyl ketone | 10 | 0.05 | 100 | 100 | 95.0 | 0.19 | 0.084 | 0.0047 |
| CPD-2 | A-1 | 2.00 | - | | B-1 | 1.49 | C-1 | 13.6 | C-2 | 54.4 | - | | D-2 | 0.06 | - | | Methyl ethyl ketone | 10 | 0.05 | 100 | 100 | 95.0 | 0.19 | 0.084 | 0.0047 |
| CPD-3 | A-1 | 2.00 | - | | B-1 | 1.49 | C-1 | 13.6 | C-2 | 54.4 | - | | D-3 | 0.06 | - | | Methyl ethyl ketone | 10 | 0.05 | 100 | 100 | 95.0 | 0.19 | 0.084 | 0.0047 |
| CPD-4 | A-1 | 2.00 | - | | B-1 | 1.49 | C-1 | 13.6 | C-2 | 54.4 | - | | D-1 | 0.01 5 | - | | Methyl ethyl ketone | 10 | 0.05 | 100 | 100 | 95.1 | 0.19 | 0.021 | 0.0012 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y ) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by **mass** | - |
| CPD-5 | A-1 | 2.00 | - | | B-1 | 1.49 | C-1 | 67.0 | - | | - | | D-1 | 0.02 | - | | Methyl ethyl ketone | 10 | 0.05 | 100 | 100 | 95.0 | 0.70 | 0.028 | 0.0004-3 |
| CPD-6 | A-1 | 2.00 | - | | B-1 | 1.49 | C-1 | 67.0 | - | | - | | D-1 | 0.01 3 | - | | Methyl ethyl ketone | 10 | 0.05 | 100 | 100 | 95.0 | 0.70 | 0.018 | 0.0002-8 |
| CPD-7 | A-1 | 2.00 | - | | B-1 | 1.49 | C-1 | 113. 0 | - | | - | | D-1 | 0.01 5 | - | | Methyl ethyl ketone | 20 | 0.05 | 100 | 100 | 97.0 | 0.70 | 0.013 | 0.0001-9 |
| CPD-8 | A-1 | 2.00 | - | | B-1 | 1.49 | C-1 | 9.52 | C-2 | 38.0 8 | - | | D-1 | 0.16 | - | | Methyl ethyl ketone | 10 | 0.20 | 100 | 100 | 92.9 | 0.19 | 0.31 | 0.018 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(X)×(Y) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by **mass** | - |
| CPD-9 | A-1 | 2.00 | - | | B-1 | 1.49 | C-2 | 68.0 | - | | - | | D-1 | 0.10 | - | | Methyl ethyl ketone | 10 | 0.05 | 100 | 100 | 95.0 | 0.06 | 0.14 | 0.025 |
| CPD-10 | A-1 | 2.00 | - | | B-1 | 1.49 | C-2 | 68.0 | - | | - | | D-1 | 0.13 | - | | Methyl ethyl ketone | 10 | 0.05 | 100 | 100 | 94.9 | 0.06 | 0.18 | 0.032 |
| CPD-11 | A-2 | 1.67 | - | | B-1 | 2.00 | C-1 | 71.0 | - | | - | | D-1 | 0.084 | - | | Methyl ethyl ketone | 10 | 0.05 | 100 | 100 | 95.0 | 0.70 | 0.11 | 0.0017 |
| CPD-12 | A-1 | 2.40 | A-3 | 0.35 | B-2 | 1.00 | C-1 | 65.0 | - | | - | | D-1 | 0.05 | - | | Methyl ethyl ketone | 10 | 0.05 | 100 | 100 | 95.0 | 0.70 | 0.073 | 0.0011 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y ) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by **mass** | - |
| CPD-13 | A-1 | 2.00 | - | | B-1 | 1.49 | C-1 | 68.0 | - | | - | | D-1 | 0.01 3 | E-1 | 0.05 | Methyl ethyl ketone | 10 | 0.05 | 100 | 100 | 95.1 | 0.70 | 0.018 | 0.0002-7 |
| CPD-14 | A-1 | 2.40 | A-3 | 0.35 | B-1 | 1.00 | C-1 | 67.0 | - | | - | | D-1 | 0.05 | E-2 | 0.05 | Methyl ethyl ketone | 10 | 0.05 | 100 | 100 | 95.1 | 0.70 | 0.071 | 0.0011 |
| CPD-15 | A-1 | 2.00 | - | | B-1 | 1.49 | C-1 | 13.6 | C-2 54.4 | | - | | D-1 | 0.06 | - | | - | | 0.00 | 100 | 100 | 95.0 | 0.19 | 0.084 | 0.0047 |
| CPD-16 | A-1 | 1.90 | A-4 | 0.5 | B-1 | 1.00 | C-1 | 55.0 | - | | - | | D-1 | 0.05 | - | | Methyl ethyl ketone | 10 | 0.05 | 100 | 100 | 94.9 | 0.70 | 0.086 | 0.0013 |
| CPD-17 | A-1 | 2.30 | A-5 | 0.4 | B-1 | 1.00 | C-1 | 63.0 | - | | | | D-1 | 0.05 | - | | Methyl ethyl ketone | 10 | 0.05 | 85 | 100 | 95.0 | 0.70 | 0.075 | 0.0011 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y ) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by mass | - |
| CPD-18 | A-1 | 2.00 | - | | B-1 | 1.49 | C-2 | 68.0 | - | | | | 0'-1 | 0.1 | - | | Methyl ethyl ketone | 10 | 0.05 | 100 | 100 | 95.0 | 0.06 | 0.140 | 0.025 |
| CPD-19 | A-1 | 2.00 | - | | B-1 | 1.49 | C-2 | 68.0 | - | | | | 0'-2 | 0.1 | - | | Methyl ethyl ketone | 10 | 0.05 | 100 | 100 | 95.0 | 0.06 | 0.140 | 0.025 |
| CPD-20 | A-1 | 2.00 | - | | B-1 | 1.49 | C-2 | 68.0 | - | | | | 0'-3 | 0.1 | - | | Methyl ethyl ketone | 10 | 0.05 | 100 | 100 | 95.0 | 0.06 | 0.140 | 0.025 |
| CPD-21 | A-1 | 2.00 | - | | B-1 | 1.49 | C-2 | 68.0 | - | | | | 0'-4 | 0.1 | - | | Methyl ethyl ketone | 10 | 0.05 | 100 | 100 | 95.0 | 0.06 | 0.140 | 0.025 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y ) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by mass | - |
| CPD-22 | A-1 | 2.00 | - | | B-1 | 1.49 | C-2 | 68.0 | - | | | | D'-5 | 0.1 | - | | Methyl ethyl ketone | 10 | 0.05 | 100 | 100 | 95.0 | 0.06 | 0.140 | 0.025 |
| CPD-23 | A-1 | 2.00 | - | | B-1 | 1.49 | C-2 | 68.0 | - | | | | D'-6 | 0.1 | - | | Methyl ethyl ketone | 10 | 0.05 | 100 | 100 | 95.0 | 0.06 | 0.140 | 0.025 |
| CPD-24 | A-1 | 2.00 | - | | B-1 | 1.49 | C-2 | 68.0 | - | | | | D'-7 | 0.1 | - | | Methyl ethyl ketone | 10 | 0.05 | 100 | 100 | 95.0 | 0.06 | 0.140 | 0.025 |
| CPD-25 | A-1 | 2.00 | - | | B-1 | 1.49 | C-2 | 68.0 | - | | | | D'-8 | 0.1 | - | | Methyl ethyl ketone | 10 | 0.05 | 100 | 100 | 95.0 | 0.06 | 0.140 | 0.025 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(X)×(Y) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by mass | - |
| CPD-26 | A-1 | 2.00 | - | | B-1 | 1.49 | C-2 | 68.0 | - | | | | 0'-9 | 0.1 | - | | Methyl ethyl ketone | 10 | 0.05 | 100 | 100 | 95.0 | 0.06 | 0.140 | 0.025 |
| CPD-27 | A-1 | 2.00 | - | | B-1 | 1.49 | C-2 | 68.0 | - | | | | 0'-10 | 0.1 | - | | Methyl ethyl ketone | 10 | 0.05 | 100 | 100 | 95.0 | 0.06 | 0.140 | 0.025 |
| CPD-28 | A-1 | 2.00 | - | | B-1 | 1.49 | C-2 | 68.0 | - | | | | 0'-11 | 0.1 | - | | Methyl ethyl ketone | 10 | 0.05 | 100 | 100 | 95.0 | 0.06 | 0.140 | 0.025 |
| CPD-29 | A-1 | 2.00 | - | | B-1 | 1.49 | C-2 | 68.0 | - | | | | 0'-12 | 0.1 | - | | Methyl ethyl ketone | 10 | 0.05 | 100 | 100 | 95.0 | 0.06 | 0.140 | 0.025 |

(continued)

| Compound No. | Epoxy resin (1) | | Epoxy resin (2) | | Curing agent (B) | | Metal element-containing particle (1) | | Metal element-containing particle (2) | | Non-metal particle | | Curing agent (D) | | Compound (E) represented by formula (3) | | Ketone compound | | Content of ketone compound with respect to total amount of compound | Content of solid epoxy resin | Content of solid curing agent | Content of magnetic particle with respect to total amount of compound (X) | Specific surface area of magnetic particle (Y) | Content of curing accelerator with respect to total amount of compound (Z) | (Z)/(-X)×(Y) |
|---|---|---|---|---|---|---|---|---|---|---|---|---|---|---|---|---|---|---|---|---|---|---|---|---|---|
| | No. | Mass | No. | Mass | No. | Mass | No. | Mass | No. | Mass | No. | Mass | No. | Mass | No. | Mass | Type | Mass | % by mass | % by mass | % by mass | % by mass | - | % by mass | - |
| CPD-30 | A-1 | 2.00 | - | | B-1 | 1.49 | - | | - | | R-1 | 19.7 | D'-1 | 0.1 | - | | Methyl ethyl ketone | 10 | 0.05 | 100 | 100 | 84.6 | - | - | - |
| CPD-31 | A-1 | 2.00 | - | | B-1 | 1.49 | - | | | | R-2 | 11.6 | D'-1 | 0.1 | - | | Methyl ethyl ketone | 10 | 0.05 | 100 | 100 | 76.4 | - | - | - |
| CPD-32 | A-1 | 3.40 | - | | - | | C-1 | 13.6 | C-2 | 54.4 | - | | D-4 | 0.17 | - | | Methyl ethyl ketone | 10 | 0.05 | 100 | - | 95.0 | 0.19 | 0.238 | 0.013 |

[Table 9]

| Example /Comparative Example | Bonded magnet compound | Varnish storage stability | Mechanical strength of bonded magnet | Change in characteristics caused by heating at time of bonded magnet formation | Moist heat resistance of bonded magnet |
|---|---|---|---|---|---|
| Example 1 | CPD-1 | A | A | A | A |
| Example 2 | CPD-2 | A | A | A | A |
| Example 3 | CPD-3 | A | A | A | A |
| Example 4 | CPD-4 | A | A | A | A |
| Example 5 | CPD-5 | A | A | A | A |
| Example 6 | CPD-6 | A | B | A | A |
| Example 7 | CPD-7 | A | B | A | B |
| Example 8 | CPD-8 | A | A | B | A |
| Example 9 | CPD-9 | A | B | B | A |
| Example 10 | CPD-10 | A | B | B | B |
| Example 11 | CPD-11 | A | A | A | A |
| Example 12 | CPD-12 | A | B | A | B |
| Example 13 | CPD-13 | A | A | A | A |
| Example 14 | CPD-14 | A | A | A | A |
| Example 15 | CPD-15 | A | B | A | B |
| Example 16 | CPD-16 | A | A | A | B |
| Example 17 | CPD-17 | A | A | A | B |
| Example 18 | CPD-32 | A | A | A | A |
| Comparative Example 1 | CPD-18 | D | C | D | C |
| Comparative Example 2 | CPD-19 | D | C | D | C |
| Comparative Example 3 | CPD-20 | B | C | D | C |
| Comparative Example 4 | CPD-21 | C | C | D | C |
| Comparative Example 5 | CPD-22 | D | C | D | C |
| Comparative Example 6 | CPD-23 | C | C | D | B |
| Comparative Example 7 | CPD-24 | A | C | D | B |
| Comparative Example 8 | CPD-25 | A | C | D | B |
| Comparative Example 9 | CPD-26 | B | D | A | C |
| Comparative Example 10 | CPD-27 | B | C | C | C |
| Comparative Example 11 | CPD-28 | D | D | D | B |
| Comparative Example 12 | CPD-29 | A | D | A | C |
| Comparative Example 13 | CPD-30 | A | C | A | C |
| Comparative Example 14 | CPD-31 | A | D | C | D |

As shown in Tables 8 and 9, Examples involving a bonded magnet compound including an epoxy resin (A), a metal element-containing particle (C), and a curing agent (D) having an imidazole structure, wherein the curing agent (D) having an imidazole structure includes a compound represented by the formula (1) and/or a compound represented by the formula (2) had a long pot life in a production process, had small change in characteristics caused by heating at the time of bonded magnet formation, and also exhibited high mechanical strength in the curing reaction of a thermosetting resin

under a low-temperature condition.

On the other hand, Comparative Examples free from the metal element-containing particle (C) and the predetermined curing agent (D) having imidazole structure were inferior in long pot life in a production process, had large change in characteristics caused by heating at the time of bonded magnet formation, and were also inferior in mechanical strength in the curing reaction of a thermosetting resin under a low-temperature condition.

## Industrial Applicability

The bonded magnet compound of the present embodiment has industrial applicability as materials for various bonded magnets.

## Claims

1. A compound comprising an epoxy resin (A), a metal element-containing particle (C), and a curing agent (D) having an imidazole structure, wherein

the curing agent (D) having an imidazole structure comprises a compound represented by the following formula (1) and/or a compound represented by the following formula (2):

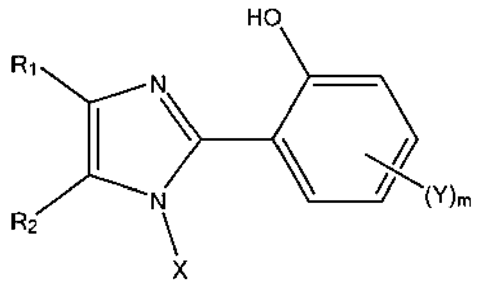

· · · · (1)

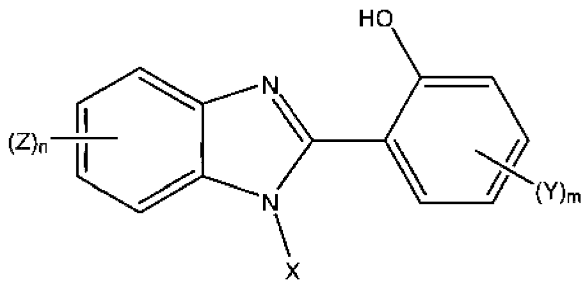

· · · · (2)

wherein

$R_1$ and $R_2$ are each independently any one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are the same as or different from each other, and $R_1$ and $R_2$ are optionally bonded to each other to form a condensed ring having no aromaticity;

X is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a heteroarylalkyl group having 4 to 20 carbon atoms and optionally having a substituent;

Y and Z are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and an acyl group having 1 to 20 carbon atoms and optionally having a substituent, Y and Z are the same as or different from each other, and two or more Y moieties or two or more Z

moieties are optionally bonded to each other to form a monocyclic ring or a condensed ring; and m and n are each independently an integer of 1 to 4.

**2.** The compound according to claim 1, wherein

in the curing agent (D) having an imidazole structure,
each of Y and Z is one member selected from the group consisting of a hydrogen atom, a hydroxy group, a carboxy group, an alkoxy group having 1 to 20 carbon atoms and having no substituent, an alkyl group having 1 to 20 carbon atoms and having a hydroxy group and/or a carboxy group as a substituent, an alkoxy group having 1 to 20 carbon atoms and having a hydroxy group and/or a carboxy group as a substituent, an aryl group having 6 to 20 carbon atoms and having a hydroxy group and/or a carboxy group as a substituent, an aryloxy group having 6 to 20 carbon atoms and having a hydroxy group and/or a carboxy group as a substituent, and an acyl group having 1 to 20 carbon atoms and having a hydroxy group and/or a carboxy group as a substituent.

**3.** The compound according to claim 1 or 2, wherein

in the curing agent (D) having an imidazole structure,
the compound represented by the formula (1) is any member selected from the group consisting of 2-(2-hydroxyphenyl)imidazole, 2-(2-hydroxyphenyl)-4(5)-methylimidazole, 4-ethyl-(2-hydroxyphenyl)-5-methylimidazole, (2-hydroxyphenyl)-4-isopropyl-5-methylimidazole, 4-butyl-(2-hydroxyphenyl)-5-methylimidazole, and 2-(2-hydroxy-3(5)-methoxyphenyl)imidazole,
and/or
the compound represented by the formula (2) is any member selected from the group consisting of 2-(2-hydroxyphenyl)benzimidazole, 2-(2-hydroxy-3(5)-methoxyphenyl)benzimidazole, 2-(1-hydroxynaphthalen-2-yl)benzimidazole, 2-(2-hydroxynaphthalen-1-yl)benzimidazole, and 2-(2-hydroxyphenyl)benzimidazole-6-carboxylic acid.

**4.** The compound according to claim 1 or 2, further comprising
a curing agent (B) different from the curing agent having an imidazole structure.

**5.** The compound according to claim 4, wherein

the curing agent (B) different from the curing agent having an imidazole structure comprises a curing agent that is in a solid state at 25°C, and
a content of the curing agent that is in a solid state at 25°C is 50% by mass or more with respect to the total amount of the curing agent.

**6.** The compound according to claim 1 or 2, wherein the metal element-containing particle (C) is a magnetic particle.

**7.** The compound according to claim 6, wherein the magnetic particle is a rare earth magnetic particle.

**8.** The compound according to claim 6, wherein a content of the magnetic particle is 70% by mass or more and 99.5% by mass or less with respect to the total mass of the compound.

**9.** The compound according to claim 6, wherein a specific surface area of the magnetic particle is 0.005 $m^2/g$ or more and 5.0 $m^2/g$ or less.

**10.** The compound according to claim 6, wherein

when a content (% by mass) of the magnetic particle with respect to the total mass of the compound is defined as (X),
a specific surface area of the magnetic particle is defined as (Y), and
a content (% by mass) of the curing agent (D) having an imidazole structure with respect to the total mass of the compound is defined as (Z),
(X), (Y), and (Z) satisfy the following expression (γ):

$$0.000010 \leq (Z)/(X) \times (Y) \leq 0.30 \ldots (\gamma).$$

**11.** The compound according to claim 1, wherein the epoxy resin (A) has a partial structure represented by the following formula (A1):

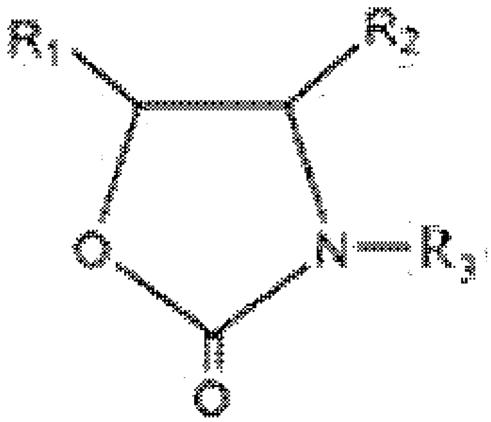

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D) having an imidazole structure, and $R_1$ to $R_3$ are the same as or different from each other.

**12.** The compound according to claim 1, wherein the epoxy resin (A) has a partial structure represented by the following formula (A2):

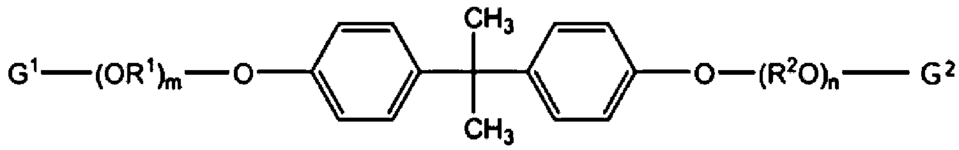

(A 2)

wherein each of $R^1$ and $R^2$ is an alkylene group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

**13.** The compound according to claim 1 or 2, wherein

the epoxy resin (A) comprises an epoxy resin that is in a solid state at 25°C, and
a content of the epoxy resin that is in a solid state at 25°C is 50% by mass or more with respect to the total amount of the epoxy resin.

**14.** The compound according to claim 1 or 2, further comprising a compound (E) represented by the following formula (3):

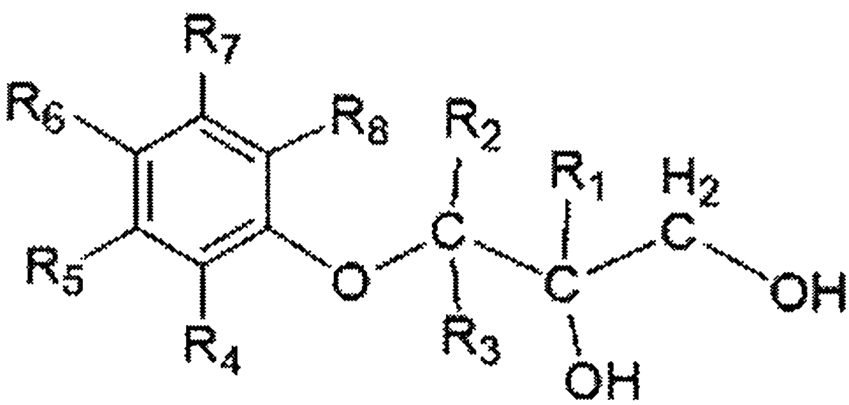

· · · · · (3)

wherein $R_1$ to $R_8$ are each independently one member selected from the group consisting of hydrogen, an alkyl group, an aromatic group, a substituent containing a heteroatom, and a substituent containing a halogen atom, $R_1$ to $R_8$ are the same as or different from each other, and at least two moieties selected from $R_4$ to $R_8$ optionally form a ring to form a condensed ring with the adjacent benzene ring.

**15.** A varnish comprising an epoxy resin (A), a curing agent (D) having an imidazole structure, a curing agent (B) different from the curing agent having an imidazole structure, and an organic solvent (G), wherein the curing agent (D) having an imidazole structure comprises a compound represented by the following formula (1) and/or a compound represented by the following formula (2):

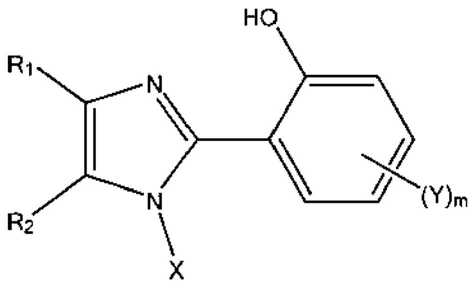

・・・・(1)

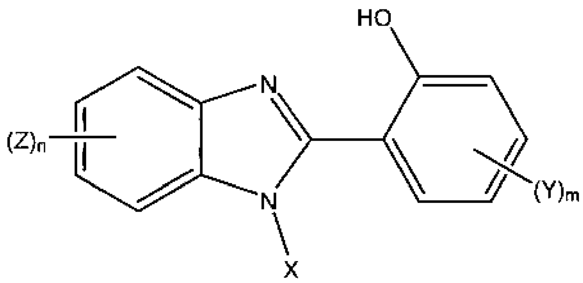

・・・・(2)

wherein

$R_1$ and $R_2$ are each independently any one member selected from the group consisting of a hydrogen atom, a hydroxy group, a carboxy group, a cyano group, a nitro group, a halogen atom, an alkyl group having 1 to 20 carbon atoms and optionally having a substituent, and a cycloalkyl group having 6 to 20 carbon atoms and optionally having a substituent, $R_1$ and $R_2$ are the same as or different from each other, and $R_1$ and $R_2$ are optionally bonded to each other to form a condensed ring having no aromaticity;

X is any one member selected from the group consisting of a hydrogen atom, an alkyl group having 1 to 20 carbon atoms and optionally having a substituent, an alkenyl group having 2 to 20 carbon atoms and optionally having a substituent, an aralkyl group having 7 to 20 carbon atoms and optionally having a substituent, and a heteroarylalkyl group having 4 to 20 carbon atoms and optionally having a substituent;

Y and Z are each independently any one member selected from the group consisting of a hydrogen atom, a halogen atom, a hydroxy group, a carboxy group, a cyano group, a nitro group, an alkyl group having 1 to 20 carbon atoms and optionally having a substituent, an alkoxy group having 1 to 20 carbon atoms and optionally having a substituent, an alkenyl group having 2 to 20 carbon atoms and optionally having a substituent, an aryl group having 6 to 20 carbon atoms and optionally having a substituent, an aryloxy group having 6 to 20 carbon atoms and optionally having a substituent, and an acyl group having 1 to 20 carbon atoms and optionally having a substituent, Y and Z are the same as or different from each other, and two or more Y moieties or two or more Z moieties are optionally bonded to each other to form a monocyclic ring or a condensed ring; and m and n are each independently an integer of 1 to 4.

**16.** A bonded magnet obtained by molding and curing the compound according to any one of claims 1 to 16.

**17.** A motor comprising the bonded magnet according to claim 16.

## INTERNATIONAL SEARCH REPORT

International application No.
**PCT/JP2024/032710**

**A. CLASSIFICATION OF SUBJECT MATTER**

***C08G 59/68***(2006.01)i; ***B22F 1/00***(2022.01)i; ***B22F 1/05***(2022.01)i; ***B22F 1/10***(2022.01)i; ***B22F 9/00***(2006.01)i; ***C08G 59/62***(2006.01)i; ***C08K 3/01***(2018.01)i; ***C08K 5/06***(2006.01)i; ***C08L 63/00***(2006.01)i; ***H01F 1/08***(2006.01)i; ***H01F 1/053***(2006.01)i

FI: C08G59/68; C08G59/62; C08L63/00 C; C08K3/01; C08K5/06; H01F1/053 130; H01F1/08 130; B22F1/00 Y; B22F1/05; B22F1/10; B22F9/00 B

According to International Patent Classification (IPC) or to both national classification and IPC

**B. FIELDS SEARCHED**

Minimum documentation searched (classification system followed by classification symbols)

C08G59/68; B22F1/00; B22F1/05; B22F1/10; B22F9/00; C08G59/62; C08K3/01; C08K5/06; C08L63/00; H01F1/08; H01F1/053

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-029152 A (THE NIPPON SYNTHETIC CHEMICAL INDUSTRY CO., LTD.) 03 March 2016 (2016-03-03)<br>claims 1-3, 7-10, paragraphs [0008]-[0009], [0081], [0085]-[0094], [0098], [0116]-[0142] examples 1-6 | 1-6, 9-10, 13, 15 |
| Y | claims 1-3, 7-10, paragraphs [0008]-[0009], [0094], [0116]-[0142] examples 1-6 | 1-10, 13, 15-17 |
| A | | 11-12, 14 |
| Y | JP 2015-160969 A (MINEBEA CO., LTD.) 07 September 2015 (2015-09-07)<br>claims 1-3, 5, paragraphs [0001]-[0002], [0015]-[0034] examples | 1-10, 13, 15-17 |
| A | | 11-12, 14 |
| A | US 2022/0336760 A1 (SAMSUNG DISPLAY CO., LTD.) 20 October 2022 (2022-10-20)<br>paragraph [0340] | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/032710**

| Patent document cited in search report | Publication date (day/month/year) | Patent family member(s) | Publication date (day/month/year) |
|---|---|---|---|
| JP 2016-029152 A | 03 March 2016 | (Family: none) | |
| JP 2015-160969 A | 07 September 2015 | (Family: none) | |
| US 2022/0336760 A1 | 20 October 2022 | KR 10-2022-0126327 A | |
| | | CN 115050898 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6606908 B
- JP 6198633 B